# EUROPÄISCHE PATENTSCHRIFT

(11) **EP 1 427 618 B1**
(45) Veröffentlichungstag und Bekanntmachung des Hinweises auf die Patenterteilung: **16.03.2005**
(21) Anmeldenummer: 02764623.1
(22) Anmeldetag: 03.07.2002
(51) Int. Cl.: B60T 7/12

(54) **BREMSANLAGE FÜR EIN FAHRZEUG**
BRAKE SYSTEM FOR A VEHICLE
SYSTEME DE FREINAGE DESTINE A UN VEHICULE

(30) Priorität: 22.09.2001 DE 10146770
(43) Veröffentlichungstag der Anmeldung: 16.06.2004
(73) Patentinhaber: DaimlerChrysler AG, 70567 Stuttgart (DE)
(72) Erfinder: BAUER, Wolf-Dietrich, D-70771 Leinfelden-Echterdingen (DE); HÄMMERLING, Carsten, 70372 Stuttgart (DE); SCHWARZHAUPT, Andreas, 74420 Oberrot (DE); SPIEGELBERG, Gernot, 71296 Heimsheim (DE); STAHL, Wolfgang, 72644 Oberboihingen (DE)
(86) Internationale Anmeldenummer: PCT/EP2002/007363
(87) Internationale Veröffentlichungsnummer: WO 2003/029060

(56) Entgegenhaltungen:
- EP-A- 0 412 463
- DE-A- 3 521 486
- DE-A- 4 112 503
- DE-A- 4 225 963
- DE-U- 9 216 134
- US-A- 5 482 134

## Beschreibung

Die Erfindung betrifft eine Bremsanlage für ein fahrerlos betreibbares Nutzfahrzeug, das insbesondere auch zum Betrieb mit Fahrer vorgesehen und zugelassen ist.

Derartige Nutzfahrzeuge sind unter anderem für den Verkehr innerhalb eines abgeschlossenen Geländes, z.B. Werksgelände, vorgesehen. Sie bewegen sich autonom zwischen vorgegebenen Orten, im wesentlichen ohne den Eingriff einer Bedienperson bzw. Fahrers. Das Fahrzeug kann sich beispielsweise entlang einer fest vorgebbaren Fahrtroute bewegen. Dabei können Situationen auftreten, in denen ein sich fahrerlos bewegendes Fahrzeug abrupt angehalten werden muss, beispielsweise weil sich unvorhergesehener Weise ein Hindernis in der Fartroute des Fahrzeugs befindet.

Bei solchen fahrerlos betreibbaren Fahrzeugen sind Einrichtungen bekannt, die das Fahrzeug bei einer Berührung mit einem Hindernis abbremsen, wie dies z.B. aus der DE 42 25 963 A1 der EP 0 412 463 A oder der DE 92 16 134 U1 hervorgeht.

Heutzutage sollen für den'autonomen Transport von Gütern auch Nutzfahrzeuge mit Strassenverkehrszulassung verwendet werden. Dadurch besteht die Möglichkeit, dass ein Fahrer das Fahrzeug bis zum Werkstor fährt und dass sich das Fahrzeug ab dem Werkstor fahrerlos zur Ladestelle im Werk bewegt, be- bzw. entladen wird und wieder zum Werkstor zurückfährt, während der Fahrer seine Ruhepause einlegt. Das Fahrzeug kann über ein Navigationssystem z.B. mit Hilfe von GPS navigiert werden. Die Fahrzeugdynamik in Längs- und Querrichtung (Lenken, Beschleunigen, etc.) kann automatisch gesteuert bzw. geregelt werden, um das Fahrzeug entsprechend der vorgebbaren Fahrtroute zum gewünschten Zielpunkt (z.B. Ladestelle) zu bewegen.

Bremsanlagen für strassenverkehrszugelassene Nutzfahrzeuge sind bekannt, z.B. aus der DE 35 21 486 A1. Sie verfügen über eine Betriebs- und Feststellbremseinrichtung, wobei die Feststellbremseinrichtung gleichzeitig als manuell betätigbare Hilfsbremseinrichtung dient, um das Fahrzeug bei Funktionsunfähigkeit der Betriebsbremseinrichtung abbremsen zu können.

Es ist die Aufgabe der vorliegenden Erfindung eine Bremsanlage für ein Fahrzeug anzugeben, die eine erhöhte Betriebssicherheit für den Einsatz im fahrerlosen Betrieb des Fahrzeugs bietet.

Diese Aufgabe wird durch eine Bremsanlage gemäß Anspruch 1 gelöst.

Bei der erfindungsgemäßen Bremsanlage kann der Notbremsvorgang nicht nur manuell, sondern zudem auch selbsttätig durch eine den Fahrbetriebszustand des Fahrzeugs während des fahrerlösen Betriebs überwachende Überwachungseinrichtung ausgelöst werden. Sobald die Überwachungseinrichtung einen unzulässigen Betriebszustand, z.B. einen Defekt der Betriebsbremse oder das Verlassen des fahrerlosen Fahrzeugs eines vorgegebenen Fahrkorridors feststellt, ruft sie ein entsprechendes Auslösesignal hervor, das den Notbremsvorgang auslöst. Dies erfolgt im fahrerlosen Betrieb, da ein manueller Eingriff nicht oder nur sehr schwer möglich ist. Es besteht weiterhin die Möglichkeit, den Notbremsvorgang manuell auszulösen. Dies kann im fahrerlosen Betrieb notwendig sein um Kollisionen zu verhindern oder im Betrieb mit Fahrer, wenn dieser nicht in der Lage ist einzugreifen, z.B. wenn er das Bewusstsein verloren hat. Das manuelle Auslösen kann durch eine in der Fahrzeugumgebung befindliche Person bzw. durch den Beifahrer mittels der Betätigung der Notbremsbedieneinrichtung erfolgen.

Durch die Überwachungseinrichtung kann im Gegensatz zu den bekannten Bremsanlagen ein Defekt der Betriebsbremseinrichtung schon erkannt werden, bevor ein Betriebsbremsvorgang ausgelöst wird, der keine oder nur eine unzureichende Bremswirkung aufweist. Der Defekt in der Betriebsbremsanlage wird mittels der Überwachungseinrichtung automatisch und unabhängig von einem hervorgerufenen Betriebsbremsvorgang erkannt und im fahrerlosen Betrieb wird dann selbsttätig ein Notbremsvorgang ausgelöst. Der Notbremsvorgang wird auch dann hervorgerufen, wenn das fahrerlos betriebene Fahrzeug einen vorgegebenen Fahrkorridors verlässt. Hierdurch können im fahrerlosen Betrieb Kollisionen mit Fahrzeugen in anderen Fahrkorridoren (dynamische Hindernisse) und statischen Hindernissen wirksam verhindert werden. Insgesamt ist durch die erfindungsgemäße Bremsanlage eine erhöhte Sicherheit für fahrerlos betreibbare Fahrzeuge erreicht.

Weitere vorteilhafte Ausgestaltungen der Bremsanlage ergeben sich aus den abhängigen Ansprüchen.

Vorteilhafterweise ist die Bremsanlage als elektro-pneumatische Bremsanlage ausgestaltet. Durch die elektrische Ansteuerung kann hier einfach ein autonomes Verzögern ohne manuellen Fahrereingriff realisiert werden.

Aufgrund der Ausgestaltung der Bremsanlage mit einer Notbremseinrichtung kann die Bremsanlage einkreisig ausgeführt werden, wodurch Aufwand und Kosten im Vergleich zu einer zweikreisigen Ausgestaltung gesenkt werden können.

Zweckmäßigerweise sind die Notbremsaktuatoren derart mechanisch in eine Ruhelage vorgespannt, dass sich die zugeordneten Radbremseinrichtungen bei in der Ruhelage befindlichen Notbremsaktuatoren im Bremszustand befinden. Die Radbremseinrichtungen sind durch entsprechende Beaufschlagung der Notbremsaktuatoren fluidisch und/oder elektrisch zwischen dem Bremszustand und einem die zugeordneten Räder des Fahrzeugs freigebenden Freigabezustand umschaltbar. Dies ermöglicht das Durchführen eines Notbremsvorgangs auch dann, wenn im Fahrzeug aufgrund einer Störung keine elektrische Energie bzw. kein fluidischer Druck mehr zur Verfügung steht. Die Notbremsaktuatoren können hierbei von Federspeicherbremszylindern gebildet sein.

Die Notbremsaktuatoren können von den Feststellbremsaktuatoren der Feststellbremseinrichtung gebildet sein, wodurch die Unabhängigkeit der Notbremseinrichtung von der Betriebsbremseinrichtung auf einfache Weise ermöglicht werden kann.

Zur Warnung anderer Verkehrsteilnehmer, insbesondere wenn sich das Fahrzeug im fahrerlosen Betrieb befindet, kann ein beispielsweise optisches und/oder akustisches Warnsignal erzeugt werden, wenn der Notbremsvorgang ausgelöst wird. Dieses Warnsignal kann auch gleichzeitig anzeigen, dass der Notbremsvorgang automatisch von der Betriebsbremsüberwachungseinrichtung ausgelöst wurde, was auf einen Defekt in der Betriebsbremseinrichtung hindeutet. Das Fahrzeug muss dann vor einem Weiterbetrieb instandgesetzt werden.

Es ist vorteilhaft, wenn gleichzeitig mit dem Auslösen des Notbremsvorgangs das Antriebsaggregat des Fahrzeugs ausgeschaltet wird, so dass zum einen während des Notbremsvorgangs das Motorschleppmoment ausgenutzt wird, jedoch keine weitere Antriebskraft in Fahrtrichtung erzeugt wird, so dass das Fahrzeug sicher und schnell angehalten werden kann.

Des weiteren ist es zweckmäßig, wenn der Notbremsvorgang mittels einer ansteuerbaren elektrischen Schalteranordnung der Notbremseinrichtung ausgelöst wird, die sich im strom- und/oder spannungslosen Zustand in einem definierten Ausgangszustand befindet. Insbesondere ist der Notbremsvorgang bei im Ausgangszustand befindlicher Schalteranordnung auslösbar, so dass auch beim Ausfall der elektrischen Energie im Fahrzeug ein Notbremsvorgang hervorrufbar ist.

Dabei kann auch das Ausschalten des Antriebsaggregats und/oder das Hervorrufen des Warnsignals mittels der Schalteranordnung erfolgen.

Bei einer vorteilhaften Ausführung weist die Notbremseinrichtung eine von der Schalteranordnung ansteuerbare Umschalteinrichtung auf, die zum Umschalten der mit Notbremsaktuatoren versehenen Radbremseinrichtungen zwischen dem Bremszustand und einem die zugeordneten Räder freigebenden Freigabezustand vorgesehen ist. Diese Ausgestaltung kann bei einer elektropneumatischen Bremsanlage mit geringem Aufwand realisiert werden.

An verschiedenen Stellen des Fahrzeugs können mehrere, insbesondere von außerhalb des Fahrzeugs gut erreichbare, manuell betätigbare Notbremsbedienelemente vorgesehen sein. Durch diese Maßnahme kann von einem Bediener ein Notbremsvorgang ausgelöst werden, vor allem dann, wenn sich das Fahrzeug fahrerlos fortbewegt und eine Notsituation auftritt, z.B. wenn sich ein Hindernis in der Fahrtroute befindet.

Es kann auch vorgesehen sein, dass eine Kopplungsvorrichtung zum Ankoppeln eines Anhängers oder Aufliegers an das Fahrzeug vorgesehen ist, die ein Steuerventil aufweist, das beim Auslösen der Notbremsung mindestens eine Anhängerbremseinrichtung zum Abbremsen der zugeordneten Anhängerräder in den Bremszustand umschaltet, so dass sowohl das Fahrzeug als auch der Anhänger bzw. Auflieger abgebremst werden.

Bei einer weiteren vorteilhaften Ausgestaltung der Bremsanlage ist vorgesehen, dass bei funktionsfähiger Betriebsbremsanlage beim Auslösen des Notbremsvorgangs zusätzlich zu den Notbremsaktuatoren auch die mit Betriebsbremsaktuatoren versehenen Radbremseinrichtungen der Betriebsbremseinrichtung in ihren Betriebsbremszustand umgeschaltet werden. Die Verzögerung kann dadurch weiter verbessert werden, um einen möglichst kurzen Bremsweg zu erreichen.

Im Folgenden wird ein Ausführungsbeispiel der erfindungsgemäßen Bremsanlage näher erläutert. Es zeigen:
- Fig. 1: ein Blockschaltbild eines ersten Ausführungsbeispiels der Notbremseinrichtung,
- Fig. 2: eine Schaltplandarstellung einer Schalteranordnung des ersten Ausführungsbeispiels der Notbremseinrichtung nach Fig. 1,
- Fig. 3: eine schematische, schaltplanartige Darstellung des pneumatischen Teils des ersten Ausführungsbeispiels der Notbremseinrichtung,
- Fig. 4: eine schematische Darstellung eines Fahrzeugs in Draufsicht, wobei die Anordnung der manuell betätigbaren Notbremsbedienelementen und einer Warnlampe zur Ausgabe eines Warnsignals gezeigt ist,
- Fig. 5: eine Schaltplandarstellung des elektrischen Teils eines zweiten Ausführungsbeispiels der Notbremseinrichtung,
- Fig. 6: eine Schaltplandarstellung des elektrischen Teils eines dritten Ausführungsbeispiels der Notbremseinrichtung,
- Fig. 7: eine schematische, schaltplanartige Darstellung des pneumatischen Teils des dritten Ausführungsbeispiels der Notbremseinrichtung,
- Fig. 8: eine Schaltplandarstellung des elektrischen Teils eines vierten Ausführungsbeispiels der Notbremseinrichtung und
- Fig. 9: eine schematische, schaltplanartige Darstellung des pneumatischen Teils des vierten Ausführungsbeispiels der Notbremseinrichtung.

Die Erfindung betrifft eine Bremsanlage für ein Fahrzeug 3, insbesondere Nutzfahrzeug, die beispielsgemäß als elektro-pneumatische Bremsanlage ausgeführt ist. Alternativ hierzu kann die Bremsanlage auch in Form einer elektro-mechanischen oder elektro-hydraulischen Bremsanlage realisiert werden. Es kann eine einkreisige oder auch zweikreisige Ausführung der Bremsanlage gewählt werden.

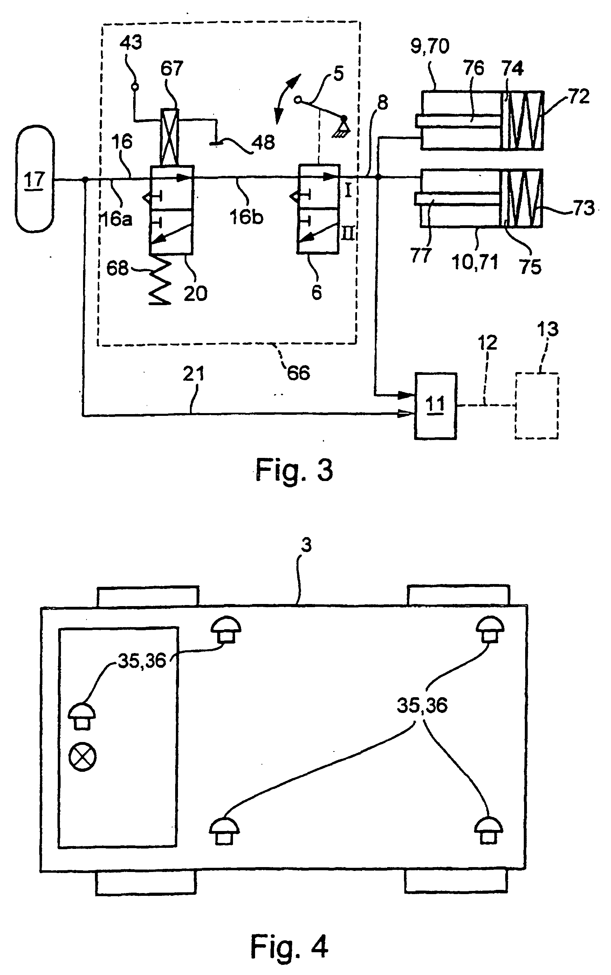

Die elektro-pneumatisch Bremsanlage weist eine Betriebsbremseinrichtung und eine Feststellbremseinrichtung auf, deren Ausführungsformen an sich bekannt sind. Die wesentlichen Komponenten einer Feststellbremseinrichtung für ein Nutzfahrzeug sind in Fig. 3 dargestellt, die die wesentlichen Elemente des pneumatischen Teils eines ersten Ausführungsbeispiels einer Notbremseinrichtung 28 zeigt. Ein manuell betätigbares, im Bereich des Fahrerplatzes des Fahrzeugs 3 angeordnetes und zwischen einer Fahr- und einer Bremsstellung verlagerbares Feststellbremsbedienelement 5 steuert bzw. betätigt ein Feststellbremssteuerventil 6 derart, dass dieses zwischen einer ersten Schaltstellung I und einer zweiten Schaltstellung II umschaltbar ist.

Das Feststellbremssteuerventil 6 ist als 3/2-Wegeventil ausgeführt und über eine Ausgangsleitung 8 fluidisch mit Feststellbremsaktuatoren 9, 10 der Feststellbremseinrichtung und mit einem Anhängersteuerventil 11 einer Kopplungsvorrichtung verbunden. Von der zum Ankoppeln eines Anhängers oder Aufliegers an das Fahrzeug 3 dienenden, an sich bekannten Kopplungsvorrichtung ist lediglich das Anhängersteuerventil 11 gezeigt, das bei hergestellter Kopplung mit einem Anhänger oder Auflieger wiederum über eine Anhängersteuerleitung 12 mit einer Anhängerbremseinrichtung 13 des Anhängers oder Aufliegers fluidisch verbunden ist.

In der ersten Schaltstellung I des Feststellbremssteuerventils 6 ist die Ausgangsleitung 8 über eine erste Versorgungsleitung 16 mit einem der Feststellbremseinrichtung des Fahrzeugs zugeordneten ersten Vorratsbehälter 17 verbunden, in dem sich unter Druck stehendes Bremsfluid, beispielsgemäß Druckluft, befindet. In der zweiten Schaltstellung II wird die erste Versorgungsleitung 16 fluidisch verschlossen und gleichzeitig wird die Ausgangsleitung 8 mit der Umgebung fluidisch verbunden.

Bekanntermaßen kann der Druck der Druckluft im ersten Vorratsbehälter 17 anhand eines nicht dargestellten Kompressors in einem vorgebbaren Druckbereich gehalten werden.

In die erste Versorgungsleitung 16 ist zwischen dem ersten Vorratsbehälter 17 und dem Feststellbremssteuerventil 6 ein elektrisch umschaltbares Umschaltventil 20 zwischengeschaltet, dessen Funktion später näher erläutert wird.

Eine zweite Versorgungsleitung 21 verbindet den Vorratbehälter und das Anhängersteuerventil 11 und dient zur Versorgung der Anhängerbremseinrichtung 13 mit Druckluft.

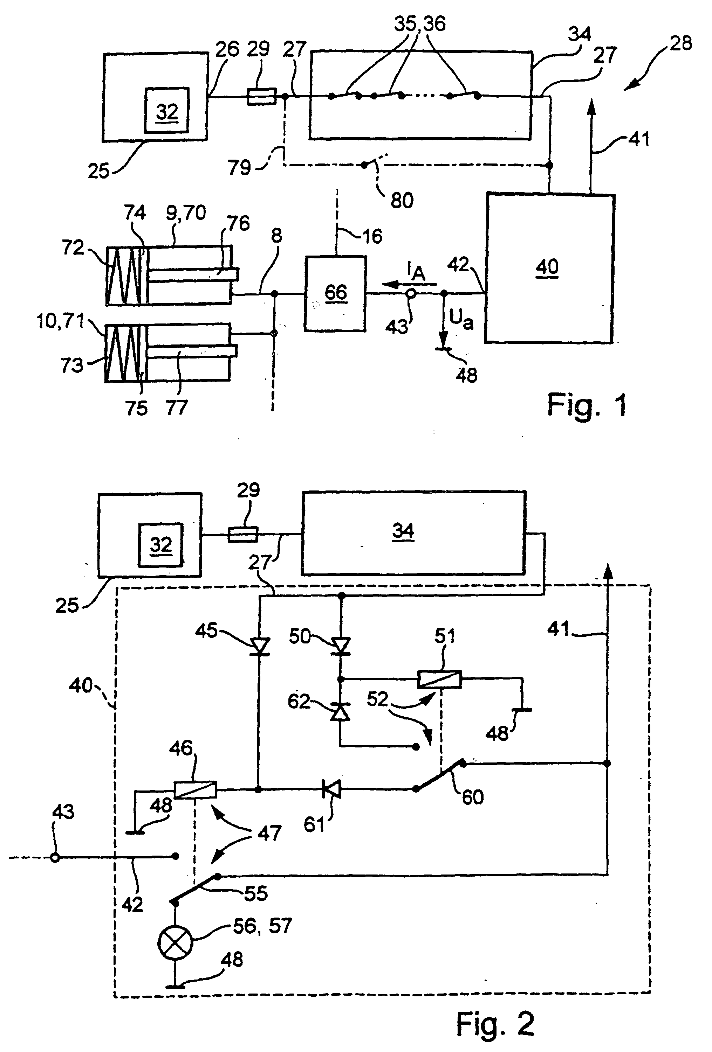

Fig. 1 zeigt ein Bremssteuergerät 25, dessen Statusausgang 26 über eine elektrische Statusleitung 27 mit einem ersten Ausführungsbeispiel einer zur Durchführung eines Notbremsvorgangs vorgesehenen Notbremseinrichtung 28 der Bremsanlage verbunden ist. In die elektrische Statusleitung 27 ist als Überlastschutz für das Bremssteuergerät eine erste Sicherung 29 eingesetzt.

Das Bremssteuergerät 25 ist Bestandteil der elektropneumatischen Bremsanlage. Elektropneumatische Bremsanlagen sind aus dem Stand der Technik bekannt und daher an dieser Stelle nicht näher beschrieben.

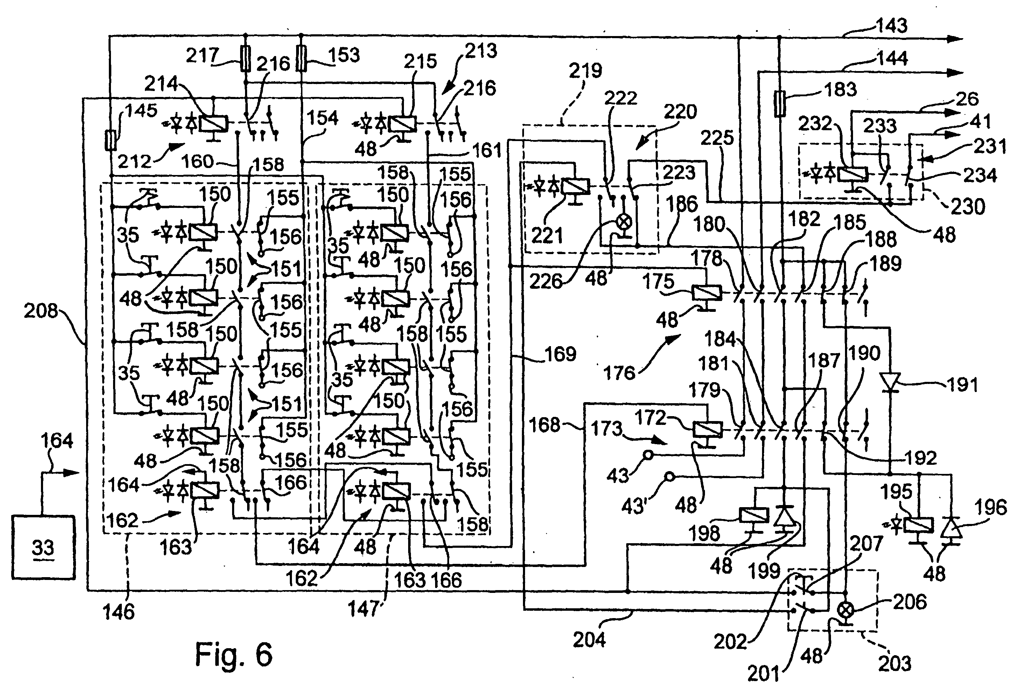

Beispielsgemäß verfügt das Bremssteuergerät 25 über eine Betriebsbremsüberwachungseinrichtung 32, die die Betriebsbremse kontinuierlich oder zyklisch auf Defekte hin überwacht. Die Betriebsbremsüberwachungseinrichtung 32 kann alternativ oder zusätzlich Bestandteil einer übergeordneten Überwachungseinrichtung 33 sein, was im Zusammenhang mit der in Fig. 6 gezeigten Ausführungsform näher erläutert wird. Am Statusausgang 26 liegt eine Statusspannung - deren Betrag größer als Null ist, z.B. +24V oder +42V - dann an, wenn die Betriebsbremsüberwachungseinrichtung 32 die Funktionsfähigkeit der Betriebsbremse festgestellt hat. Bei einem erkannten Defekt der Betriebsbremseinrichtung, insbesondere bei deren Funktionsunfähigkeit liegt am Statusausgang 26 keine Statusspannung an, bzw. der Wert der Statusspannung hat in etwa der Wert Null Volt.

Wie in Fig. 1 zu erkennen ist, weist die Notbremseinrichtung 28 eine zum manuellen Auslösen eines Notbremsvorgangs dienende Notbremsbedieneinrichtung 34 auf. Die Notbremsbedieneinrichtung 34 ist in die Statusleitung 27 eingesetzt und in Reihe zur ersten Sicherung 29 geschaltet. Sie weist beim bevorzugten Ausführungsbeispiel eine Reihenschaltung mehrerer Notbremsbedienelemente 35 auf, die z.B. als Nottaster 36 ausgebildet sein können. Diese Nottaster 36 sind in Form von elektrischen NC-Schaltern (NC = Normally Closed) realisiert, die in ihrem unbetätigten Zustand jeweils ihre beiden elektrischen Anschlusskontakte elektrisch leitend verbinden, so dass die Statusleitung 27 durch die Notbremsbedieneinrichtung elektrisch nicht unterbrochen ist, sofern sich alle Nottaster 36 im unbetätigten Zustand befinden. Sobald nur ein Nottaster 36 betätigt wurde öffnet der Schalter des betreffenden Nottasters und die Statusleitung 27 ist elektrisch unterbrochen.

Die Formgestaltung der Nottaster ist beliebig wählbar. In Fig. 4 sind diese in einer pizartigen Ausgestaltung schematisch dargestellt. Die Nottaster 36 sind an verschiedenen Stellen des Fahrzeugs 3 angeordnet. Die Anordnung sollte so gewählt werden, dass zumindest ein Teil der Nottaster 36 für einen neben dem Fahrzeug 3 stehenden Bediener auch von außen gut erreichbar ist, um bei fahrerlosem Betrieb des Fahrzeugs 3 im Notfall einen Notbremsvorgang auslösen zu können. Die Anzahl der Nottaster ist beliebig und hängt insbesondere von der Größe und der Bauart des Fahrzeugs 3 ab.

Eine ansteuerbare Schalteranordnung 40 der Notbremseinrichtung 28 ist mit der Statusleitung 27 elektrisch verbunden. Des weiteren ist die Schalteranordnung 40 mit einer Versorgungsspannungsquelle über eine Spannungsversorgungsleitung 41 verbunden. Sie weist einen Ausgang 42 auf, dessen elektrisches Signal an einem Ausganganschluss 43 abgreifbar ist. Der Schaltzustand der elektrischen Schalteranordnung 40 kann mittels der Statusspannung bzw. mittels des Statusstroms, der der Schalteranordnung 40 über die Statusleitung 27 zugeführt wird geändert werden. Vom Schaltzustand der Schalteranordnung 40 hängt auch der verfügbare elektrische Ausgangsstrom I_{A} bzw. die verfügbare elektrische Ausgangsspannung U_{A} am Ausgang 42 und damit am Ausgangsanschluss 43 ab.

Eine Ausführungsform der Schaltanordnung 40 des ersten Ausführungsbeispiels der Notbremseinrichtung 28 ist in Fig. 2 dargestellt. An die Statusleitung 27 ist in Reihe zur Notbremsbetätigungseinrichtung 34 eine erste Diode 45 angeschlossen, an die wiederum in Reihe mit einer ersten Schaltspule 46 eines ersten Schaltrelais 47 verbunden ist, wobei die erste Schaltspule 46 mit der Fahrzeugmasse 48 verbunden ist. Parallel zur ersten Diode 45 und zur ersten Schaltspule 46 ist eine zweite Diode 50 und eine zweite Schaltspule 51 eines zweiten Schaltrelais 52 in Reihenschaltung mit der Fahrzeugmasse 48 verbunden. Die erste und die zweite Diode 45, 50 sind derart gerichtet, dass ein Strom von der Notbremsbetätigungseinrichtung 34 über die Dioden 45, 50 und die erste bzw. zweite Schaltspule 46 bzw. 51 zur Fahrzeugmasse 48 fließen kann.

Ein von der ersten Schaltspule 46 gesteuerter erster Schalter 55 des ersten Schaltrelais 47 verbindet bei unbestromter erster Schaltspule 46 ein Warngerät 56, beispielsgemäß einer Warnlampe 57, mit der Spannungsversorgungsleitung 41 und somit mit der Versorgungsspannungsquelle. Die Warnlampe 57 ist an ihrem anderen Anschluss mit der Fahrzeugmasse verbunden, so dass bei in der Ruhelage befindlichem ersten gesteuerten Schalter 55 die Warnlampe 57 leuchtet.

Es versteht sich, dass alternativ oder zusätzlich zur Warnlampe 57 auch ein beliebiges anderes Warngerät verwendbar ist, mit dem ein akustisches und/oder optisches Warnsignal erzeugt werden kann.

Bei bestromter erster Schaltspule verbindet der erste gesteuerte Schalter 55 den Ausgangsanschluss 43 mit der Spannungsversorgungsleitung 41.

Ein von der zweiten Schaltspule 51 gesteuerter zweiter Schalter 60 des zweiten Schaltrelais 52 verbindet bei unbestromter zweiter Schaltspule 51 die Spannungsversorgungsleitung 41 über eine dritte Diode 61 mit dem ersten Schaltrelais 46 und dadurch gleichzeitig mit der ersten Diode 45, wobei ein Stromfluss aufgrund der Ausrichtung der dritten Diode 61 von der Versorgungsspannungsleitung 41 über den zweiten Schalter 60, die dritte Diode 61, die erste Schaltspule 46 zur Fahrzeugmasse 48 möglich ist.

Bei bestromter zweiter Schaltspule 51 stellt der zweite Schalter 60 eine Reihenschaltung her zwischen der Spannungsversorgungsleitung 41, dem zweiten Schalter 60, einer vierten Diode 62, der zweiten Schaltspule 51 und der Fahrzeugmasse 48, wobei ein Stromfluss aufgrund der Ausrichtung der vierten Diode 62 von der Versorgungsspannungsleitung 41 zur Fahrzeugmasse möglich ist.

An den Ausgangsanschluss 43 ist eine Umschalteinrichtung 66 der Notbremseinrichtung 28 angeschlossen. Sie ist in Abhängigkeit vom Ausgangsstrom I_{A} bzw. der Ausgangsspannung U_{A} am Ausgangsanschluss 43 zwischen mehreren Zuständen umschaltbar.

Die Umschalteinrichtung 66 weist das Umschaltventil 20 auf und kann auch lediglich vom Umschaltventil 20 gebildet sein. Gemäß Fig. 3 enthält die Umschalteinrichtung 66 auch das Feststellbremsbedienelement 5 und das Feststellbremssteuerventil 6. Das Umschaltventil 20 verfügt über einen zum Umschalten dienenden ersten Elektromagneten 67, der einerseits mit der Fahrzeugmasse und andererseits mit dem Ausgangsanschluss 43 verbunden ist. Das Umschaltventil 20 ist mechanisch, z.B. mittels einer Feder 68 in eine Ruhelage vorgespannt, so dass es bei unbestromtem ersten Elektromagneten 67 diese Ruhelage einnimmt. Durch Bestromung des ersten Elektromagneten 67 kann das Umschaltventil 20 aus seiner Ruhelage in eine Betriebslage umgeschaltet werden, die in Fig. 3 gezeigt ist. In der Betriebslage gibt das Umschaltventil 20 die erste Versorgungsleitung 16 frei und verbindet den ersten Vorratsbehälter 17 mit dem Feststellbremssteuerventil 6. In der Ruhelage wird der mit dem ersten Vorratsbehälter 17 verbundene Abschnitt 16a der ersten Versorgungsleitung 16 fluidisch abgesperrt und gleichzeitig wird der mit dem Feststellbremssteuerventil 6 verbundene Abschnitt 16b der ersten Versorgungsleitung 16 fluidisch mit der Umgebung verbunden.

Die Feststellbremsaktuatoren 9, 10 dienen beim bevorzugten Ausführungsbeispiel gleichzeitig als Notbremsaktuatoren 70, 71, die beim Auslösen eines Notbremsvorgangs in einen die zugeordneten Radbremseinrichtungen in einen Bremszustand umschalten, so dass die betreffenden Fahrzeugräder abgebremst werden. Gemäß der Fig. 1 und 3 sind zwei Feststellbremsaktuatoren 9, 10 bzw. Notbremsaktuatoren 70, 71 vorgesehen, die z.B. auf die Fahrzeugräder an der Hinterachse des Fahrzeugs 3 einwirken können. Alternativ hierzu könnten auch nicht lediglich die Radbremseinrichtungen einer Achse des Fahrzeugs, sondern auch mehrerer oder aller Achsen des Fahrzeugs 3 Notbremsaktuatoren aufweisen.

Die Notbremsaktuatoren 70, 71 sind im vorliegenden Fall von Federspeicherbremszylindern gebildet, deren Kolben 74, 75 und die damit verbundenen Kolbenstangen 76, 77 jeweils mittels einer Feder 72 bzw. 73 in einen Ruhezustand vorgespannt sind, in dem sich die zugeordnete Radbremseinrichtung im Bremszustand befindet. Durch Druckbeaufschlagung des Kolbens 74 bzw. 75 von der der Feder 72 bzw. 73 entgegengesetzten Seite her kann der Kolben entgegen der Federkraft verschoben werden, wobei die zugeordnete Radbremseinrichtung in einen das betreffende Rad freigebenden Freigabezustand gebracht werden kann.

Die Wirkungsweise der Notbremseinrichtung 28 wird im Folgenden erläutert.

Sofern die Betriebsbremsüberwachungseinrichtung 32 keinen Defekt der Betriebsbremseinrichtung feststellt, liegt am Statusausgang 26 eine Statusspannung von beispielsweise +24V oder +42V an. Unter der weiteren Annahme, dass die Notbremsbedieneinrichtung 34 unbetätigt ist, das heißt keiner der Nottaster 36 betätigt wurde, liegt auch an der Statusleitung 27 die Statusspannung an. Dies führt dazu, dass sowohl durch die erste Schaltspule 46 als auch durch die zweite Schaltspule 51 ein Strom fließt, so dass der jeweils zugeordnete gesteuerte erste Schalter 55 bzw. zweite Schalter 60 ihre nicht in Fig. 2 dargestellte aktivierte Schaltstellung einnehmen. Über den ersten Schalter 55 des ersten Schaltrelais 47 ist der Ausgangsanschluss 43 mit der Spannungsversorgungsleitung 41 verbunden, so dass auch dort eine vorzugsweise der Statusspannung entsprechende Ausgangsspannung U_{A} anliegt.

Dies hat zur Folge, dass der erste Elektromagnet 67 des Umschaltventils 20 bestromt wird und das Umschaltventil seine nicht gezeigte Betriebslage einnimmt. Unter der Annahme, dass die Feststellbremseinrichtung mittels des Feststellbremsbedienelements 5 nicht betätigt ist, so dass sich das Feststellbremssteuerventil 6 in seiner ersten Schaltstellung I befindet und die Ausgangsleitung 8 mit dem Abschnitt 16b der Versorgungsleitung 16 verbindet, sind die von den Feststellbremszylindern 9, 10 gebildeten Notbremszylinder 70, 71 mit Druckluft aus dem ersten Vorratsbehälter 17 beaufschlagt. Die die Notbremszylinder 70, 71 aufweisenden Radbremseinrichtungen befinden sich dann in dem die zugeordneten Fahrzeugräder freigebenden Freigabezustand.

Wenn die Betriebsbremsüberwachungseinrichtung 32 einen Defekt der Betriebsbremseinrichtung erkannt hat fällt die Statusspannung am Statusausgang 26 auf etwa Null Volt ab, was dazu führt, dass auch an der Statusleitung eine Spannung von etwa Null Volt anliegt. Auch das Betätigen von einem der Nottaster 36 (manuelles Auslösen eines Notbremsvorgangs), der die Statusleitung 27 auftrennt, trennt die Schalteranordnung 40 vom Statusausgang 26 ab, so dass an dem der Schalteranordnung zugeordneten Abschnitt der Statusleitung 27 eine Spannung von ca. Null Volt anliegt.

Dadurch fließt durch die erste Schaltspule 46 kein Strom mehr und der erste gesteuerte Schalter 55 nimmt die in Fig. 2 dargestellte Ruhelage ein. Dann leuchtet die Warnlampe 57 und gibt ein optisches Warnsignal aus. Am Ausgangsanschluss 43 liegt keine Ausgangsspannung U_{A} an, bzw. U_{A} hat den Wert von etwa Null Volt.

Dies hat zur Folge, dass durch den ersten Elektromagneten 67 des Umschaltventils 20 kein Strom fließt (U_{A} = 0V). Das Umschaltventil 20 wird mittels der Feder 68 in seine Ruhelage verlagert, wobei der Abschnitt 16a der ersten Versorgungsleitung 16 abgesperrt und der Abschnitt 16b der ersten Versorgungsleitung 16 fluidisch mit der Umgebung verbunden wird. Die Notbremsaktuatoren 70, 71 werden dadurch über die Ausgangsleitung 8, das Feststellbremssteuerventil 6 und das Umschaltventil 20 entlüftet, d.h. an der der Feder 72, 73 entgegengesetzte Seite des Kolbens 74, 75 herrscht ein pneumatischer Druck in etwa entsprechend dem Umgebungsluftdruck. Die Federn 72, 73 bewegen die Kolben 74, 75 mit den Kolbenstangen 76, 77 wodurch die die Notbremsaktuatoren 70, 71 aufweisenden Radbremseinrichtungen in den Bremszustand gebracht werden, so dass ein Notbremsvorgang durchgeführt wird.

Wie aus Fig. 3 zu entnehmen ist, kann das Auslösen eines Notbremsvorgangs bei an das Fahrzeug 3 angekoppeltem Anhänger oder Auflieger über das Anhängersteuerventil 11, die Steuerleitung 12 und die Anhängerbremseinrichtung 13 zusätzlich auch an den Anhänger-Radbremseinrichtungen wenigstens einer Anhängerachse einen Bremsvorgang auslösen, um die Bremswirkung des aus Fahrzeug 3 und Anhänger bzw. Auflieger bestehenden Zuges zu verbessern.

Weiterhin besteht die Möglichkeit bei intakter Betriebsbremseinrichtung den Notbremsvorgang dadurch zu unterstützen, dass zusätzlich zu den Notbremsaktuatoren 70, 71 auch die Betriebsbremsaktuatoren in ihre jeweilige Bremsstellung umgeschaltet werden. Dadurch wird eine verbesserte Bremswirkung erzielt. Zudem kann die Bremskraft bzw. der Bremsdruck an den Radbremseinrichtungen der Betriebsbremse gesteuert oder geregelt werden (Antiblockierregelung, Bremskraftverteilungsregelung Vorderachse-Hinterachse, etc.). Dieses Zuschalten der Betriebsbremseinrichtung beim Auslösen eines Notbremsvorgangs kann beispielsweise auf sehr einfache Weise dadurch realisiert werden, dass die Ausgangsspannung U_{A} und/oder der Ausgangsstrom I_{A} an das Bremssteuergerät der elektropneumatischen Bremsanlage übertragen wird, so dass vom Bremssteuergerät das Auslösen eines Notbremsvorgangs durch manuelle Betätigung der Notbremsbedieneinrichtung 34 erkannt werden kann. Es versteht sich, dass die Unterstützung des Notbremsvorgangs mit Hilfe der Betriebsbremseinrichtung nicht möglich ist, wenn diese funktionsunfähig ist und der Notbremsvorgang automatisch von der Betriebsbremsüberwachungseinrichtung 32 ausgelöst wird.

Über dem Ausgangsanschluss 43 wird beim Ausführungsbeispiel gleichzeitig das Antriebsaggregat des Fahrzeugs 3, hier ein Antriebsmotor, mit Spannung versorgt. Sobald ein Notbremsvorgang vorliegt und die Ausgangsspannung etwa auf Null Volt absinkt wird der Antriebsmotor abgeschaltet. Während des Notbremsvorgangs erzeugt der Antriebsmotor aufgrund seines Schleppmotors dann ein Bremsmoment an den angetriebenen Rädern des Fahrzeugs. Überdies wird ein Antriebsmoment auf die angetriebenen Räder vermieden, das dem durch den Notbremsvorgang hervorgerufenen Notbremsmoment entgegenwirken, würde.

Die gesamte Lenkeinrichtung des Fahrzeugs wird auch während des Notbremsvorgangs mit elektrischer Energie versorgt, so dass sie voll einsatzfähig bleibt und die Lenkbarkeit des Fahrzeugs 3 auch bei einem Notbremsvorgang gewährleistet ist.

Bei einer weiteren Ausführungsvariante der Bremsanlage kann zumindest das manuelle Auslösen eines Notbremsvorgangs ein- und ausschaltbar sein. Dies dient dazu, die Bremsanlage und damit das Fahrzeug 3 sowohl für den autonomen, fahrerlosen Betrieb, als auch für den Betrieb mit Fahrer im öffentlichen Straßenverkehr tauglich zu machen. Im fahrerlosen Betrieb, z.B. bei Fahrten innerhalb eines Werksgeländes, muss die Möglichkeit eines manuellen Eingriffs gegeben sein. Aufgrund der am Fahrzeug 3 angebrachten Nottaster 36 kann eine neben oder auf dem Fahrzeug befindliche Person (wie z.B. Verkehrsteilnehmer) im Notfall das sofortige Anhalten des Fahrzeugs durch Betätigen eines der Nottaster 36 auslösen, beispielsweise um einen Unfall zu verhindern.

Im Betrieb mit Fahrer ist es jedoch eher erforderlich dem Fahrer die Verantwortung zu übertragen und einen Eingriff Dritter im wesentlichen auszuschließen. Dann kann zumindest das manuelle Auslösen eines Notbremsvorgangs verhindert werden.

Wie in Fig. 1 strichpunktiert angedeutet, könnte hierfür parallel zur Notbremsbedieneinrichtung 34 eine elektrische Überbrückungsleitung 79 mit einem dritten Schalter 80 vorgesehen sein. Bei geschlossenem dritten Schalter 80 wäre die Notbremsbedieneinrichtung 34 wirkungslos, wohingegen bei geöffnetem dritten Schalter 80 die Notbremsbedieneinrichtung 34 als Auslöseeinrichtung für einen Notbremsvorgang wirksam wäre.

Der dritte Schalter 80 kann manuell oder automatisch betätigbar sein. Beispielsweise kann er über eine nicht dargestellte Fahrererkennungseinrichtung angesteuert werden, die zur Ermittlung dient, ob sich das Fahrzeug 3 im fahrerlosen Betrieb befindet oder durch einen Fahrer gesteuert wird. Die Fahrererkennungseinrichtung kann hierfür beispielsweise einen Fahrersitzbelegungssensor aufweisen oder die manuelle Bedienung von Bedienelementen wie Lenkrad und/oder Pedale detektieren, um auf einen fahrerlosen bzw. auf einen fahrergesteuerten Betrieb zu schließen.

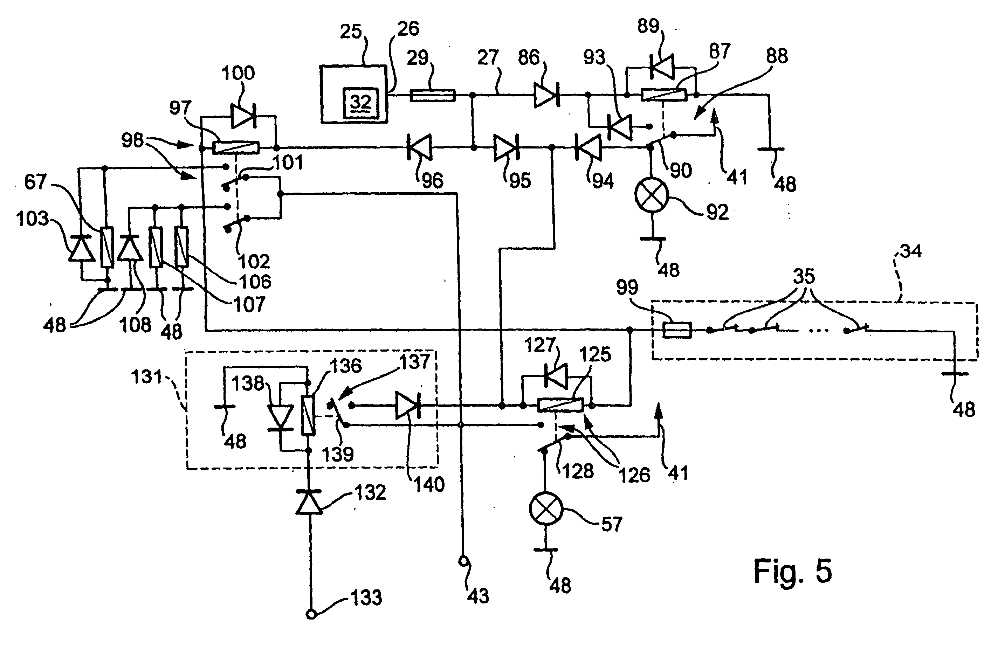

Fig. 5 zeigt den elektrischen Teil eines zweiten Ausführungsbeispiels der erfindungsgemäßen Notbremseinrichtung 28. Bei diesem zweiten Ausführungsbeispiel ist zusätzlich vorgesehen, dass beim Auslösen des Nothals auch die Radbremseinrichtungen an der Vorderachse des Fahrzeugs zur Erzielung einer Bremswirkung angesteuert werden. In Fig. 5 sind die zum ersten Ausführungsbeispiel identischen Komponenten der Notbremseinrichtung 28 mit gleichen Bezugszeichen versehen.

An den Statusausgang 26 des Bremssteuergeräts 25 ist die Statusleitung 27 angeschlossen, wobei ausgehend vom Statusausgang 26 in die Statusleitung 27 die erste Sicherung 29 eine fünfte Diode 86 und eine dritte Schaltspule 87 eines dritten Schaltrelais 88 in Reihe geschaltet, wobei die dritte Schaltspule 87 mit ihrem weiteren elektrischen Anschluss mit der Fahrzeugmasse 48 verbunden ist. Parallel zur dritten Schaltspule 87 und gegensinnig zur fünften Diode 86 ist eine Freilaufdiode 89 geschaltet. Ein gesteuerter vierter Schalter 90 des dritten Schaltrelais 88 ist zwischen der Spannungsversorgungsleitung 41 und einer Fehlerlampe 92, deren zweiter elektrischer Kontakt mit der Fahrzeugmasse 48 verbunden ist, zwischengeschaltet und verbindet die Fehlerlampe 92 in stromlosem Zustand der dritten Schaltspule 87 mit der Spannungsversorgungsleitung 41. In bestromtem Zustand der dritten Schaltspule 87 verbindet der gesteuerte vierte Schalter 90 die Spannungsversorgungsleitung 41 mit einer sechsten Diode 93 anodenseitig, wobei die sechste Diode 93 kathodenseitig mit den Kathoden der fünften Diode 86 und der Freilaufdiode 89 und der dritten Schaltspule 87 verbunden ist. Dies führt dazu, dass sich das dritte Schaltrelais 88 sozusagen selbst erregt, da der gesteuerte vierte Schalter 90 eine Stromflüss durch die dritte Schaltspule 87 aufrecht erhält, sobald die dritte Schaltspule 87 des dritten Schaltrelais 88 einmal angezogen hat und die Versorgungsspannung über die Spannungsversorgungsleitung 41 erhalten bleibt. Sollte nach dem Einschalten der Zündung am Statusausgang 26 des Bremssteuergeräts keine Statusspannung anliegen, so leuchtet die Fehlerlampe 92 und zeigt einen Defekt in der Bremseinrichtung des Fahrzeugs an.

Parallel zur Fehlerlampe 92 ist folgende Reihenschaltung vorgesehen: eine sechste Diode 94, eine siebte Diode 95, eine achte Diode 96, eine vierte Schaltspule 97 eines vierten Schaltrelais 98 und die Notbremsbedieneinrichtuhg 34. Im Unterschied zum ersten Ausführungsbeispiel ist in Reihe zu den Notbremsbedienelementen 35 der Notbremsbedieneinrichtung 34 eine zweite Sicherung 99 geschaltet. Die Anordnung der drei Dioden 94, 95, 96 ist derart, dass die Anode der sechsten Diode 94 mit der Fehlerlampe 92 verbunden ist. Die Kathode der sechsten Diode 94 ist dann mit der Kathode der siebten Diode 95 verbunden, die Anode der siebten Diode 95 ist mit der Anode der achten Diode 96 verbunden, und die Kathode der achten Diode 96 ist dann mit der vierten Schaltspule 97 des vierten Schaltrelais 98 verbunden. Parallel zu der vierten Schaltspule 97 ist eine Freilaufdiode 100 vorgesehen, deren Kathode. mit der Kathode der achten Diode 96 verbunden ist.

Das vierte Schaltrelais 98 verfügt über einen gesteuerten fünften Schalter 101 und einen gesteuerten sechsten Schalter 102, die miteinander gekoppelt sind. Eingangsseitig sind die beiden Schalter 101, 102 elektrisch miteinander und mit dem Ausgangsanschluss 43 verbunden. Ausgangsseitig ist der eine fünfte Schalter 101 mit dem ersten Elektromagneten 67 des Umschaltventil 20 verbunden. In Abwandlung zum Ausführungsbeispiel gemäß Fig. 3 ist daher der erste Elektromagnet 67 nicht direkt mit dem Ausgangsanschluss 43 verbunden. Der erste Elektromagnet 67 wird hier vom vierten Schaltrelais 98 angesteuert. Parallel zum ersten Elektromagneten 67 ist bei der Ausführungsform nach Fig. 5 eine Freilaufdiode 103 geschaltet deren Kathode ausgangsseitig mit dem fünften Schalter 101 des vierten Schaltrelais 98 verbunden ist. Der erste Elektromagnet 67 ist mit seinem weiteren elektrischen Anschluss mit der Fahrzeugmasse 48 verbunden.

Der andere gesteuerte sechste Schalter 102 des vierten Schaltrelais 98 ist ausgangsseitig mit einer Parallelschaltung aus einem zweiten Elektromagneten 106, einem dritten Elektromagneten 107 und einer Freilaufdiode 108 verbunden, wobei die Parallelschaltung andererseits an die Fahrzeugmasse 48 angeschlossen ist.

Die beiden Elektromagneten 106, 107 sind dafür vorgesehen die Radbremseinrichtungen der Betriebsbremsanlage des Fahrzeugs anzusteuern, um dort eine Notbremskraft hervorzurufen. Die Ansteuerung kann entsprechend der im Zusammenhang mit dritten und vierten Ausführungsbeispiel erläuterten Ansteuerung an der Vorder- und Hinterachse des Fahrzeugs erfolgen. Alternativ kann einer der Elektromagneten 106, 107 entfallen und mittels dem verbleibenden Elektromagneten lediglich die Radbremseinrichtungen der Betriebsbremse an einer Fahrzeugachse zur Notbremsung angesteuert werden.

In Fig. 5 ist weiterhin zu erkennen, dass der mit der vierten Schaltspule 97 des vierten Schaltrelais 98 verbundene Anschluss der Notbremsbedieneinrichtung 34 mit einer fünften Schaltspule 125 eines fünften Schaltrelais 126 elektrisch verbunden ist. Der andere elektrische Anschluss der fünften Schaltspule 125 ist mit den Kathoden der sechsten und siebten Diode 94, 95 und gleichzeitig mit der Kathode einer parallel zur fünften Schaltspule 125 vorgesehenen Freilaufdiode 127 verbunden.

Ein siebter Schalter 128 des fünften Schaltrelais 126 ist eingangsseitig an die Spannungsversorgungsleitung 41 angeschlossen. Bei nicht bestromter fünfter Schaltspule 125 verbindet der gesteuerte siebte Schalter 128 die Spannungsversorgungsleitung 41 mit der Warnlampe 57, die mit ihrem anderen elektrischen Anschluss an der Fahrzeugmasse 48 liegt. Bei bestromter fünfter Schaltspule 125, sozusagen bei angezogenem fünftem Schaltrelais 126 verbindet der siebte Schalter 128 die Spannungsversorgungsleitung 41 mit dem Ausgangsanschluss 43.

Bei der in Fig. 5 gezeigten Ausführungsform ist des weiteren eine Startüberbrückung 131 vorgesehen, die dazu dient, das Abfallen des fünften Schaltrelais 126 beim Starten des Motors zu verhindern. Da beim Starten des Motors die Statusspannung kurzzeitig stark absinkt und dies das Abfallen des fünften Schaltrelais 126 und damit das Auslösen des Notbremsvorgangs zur Folge hätte, wird die fünfte Schaltspule 125 mittels der Startüberbrückung 131 während des Startvorgangs des Motors bestromt, so dass das Abfallen des fünften Schaltrelais 126 verhindert ist.

Die Startüberbrückung 131 ist über eine neunte Diode 132 an die Zündungsklemme 133 angeschlossen. Beim Starten des Motors liegt an der Zündungsklemme 133 eine Zündungsspannung an, die im wesentlichen der Versorgungsspannung des Fahrzeugs entspricht, wie sie auch an der Spannungsversorgungsleitung 41 anliegt. Die neunte Diode 132 ist dabei anodenseitig mit der Zündungsklemme 133 verbunden. Die Kathode dieser Diode 132 ist mit einersechsten Schaltspule 136 eines sechsten Schaltrelais 137 verbunden, wobei der andere elektrische Anschluss der sechsten Schaltspule 136 an der Fahrzeugmasse 48 anliegt. Parallel zur sechsten Schaltspule 136 ist eine Freilaufdiode 138 geschaltet, deren Anode ebenfalls mit der Fahrzeugmasse 48 verbunden ist.

Ein gesteuerter achter Schalter 139 des sechsten Schaltrelais 137 ist eingangsseitig mit dem Ausgangsanschluss 43 verbunden und stellt in bestromtem Zustand der sechsten Schaltspule 136 eine elektrische Verbindung zwischen dem Ausgangsanschluss 43 und der Anode einer zehnten Diode 140 der Startüberbrückung 131 her. Kathodenseitig ist die zehnte Diode 140 der Startüberbrückung 131 mit der fünften Schaltspule 125 des fünften Schaltrelais 126 und dabei gleichzeitig mit den Kathoden der sechsten und siebten Diode 94, 95 und der dem fünften Schaltrelais 126 zugeordneten Freilaufdiode 127 verbunden. Die fünfte Schaltspule 125 des fünften Schaltrelais 126 ist daher zwischen die Notbremsbedieneinrichtung 34 und die Kathode der zehnten Diode 140 der Startüberbrückung 131 zwischengeschaltet.

Die Funktionsweise des elektrischen Teils des zweiten Ausführungsbeispiels der Notbremseinrichtung 28 ist wie folgt:

Wird beim Einschalten der Zündung ein Defekt in der Betriebsbremseinrichtung festgestellt, so liegt am Statusausgang 26 des Bremssteuergeräts 25 eine Statusspannung in Höhe von etwa Null Volt an. Durch die dritte Schaltspule 87 des dritten Schaltrelais 88 fließt somit kein Strom, so dass sich der gesteuerte vierte Schalter 90 des dritten Schaltrelais 88 in der in Fig. 5 gezeigten Schaltstellung befindet, wobei die Fehlerlampe 92 einerseits mit der Fahrzeugmasse 48 und andererseits über den vierten Schalter 90 mit der Spannungsversorgungsleitung 41 verbunden ist, so dass die Fehlerlampe 92 leuchtet und einen Fehler in der Betriebsbremseinrichtung anzeigt.

Ist die Betriebsbremseinrichtung funktionsfähig, wird die dritte Schaltspule 87 des dritten Schaltrelais 88 aufgrund der am Statusausgang 26 anliegenden positiven Statusspannung bestromt, wodurch der vierte Schalter 90 des dritten Schaltrelais 88 angezogen wird und die Spannungsversorgungsleitung 41 mit der sechsten Diode 93 verbindet. Über die Reihenschaltung Spannungsversorgungsleitung 41, sechste Diode 93, dritter Schaltspule 87 und Fahrzeugmasse 48 wird die dritte Schaltspule 87 bestromt, solange an der Spannungsversorgungsleitung 41 eine Versorgungsspannung anliegt und die Fehlerlampe 92 leuchtet nicht.

Aufgrund der am Statusausgang 26 anliegenden Statusspannung im funktionsfähigen Zustand der Betriebsbremseinrichtung zieht auch das vierte Schaltrelais 98 an, so dass die elektrische Verbindung zwischen dem Ausgangsanschluss 43 und dem ersten Elektromagneten 67 des Umschaltventils 20 hergestellt ist. Das Umschaltventil 20 befindet sich daher in seiner in Fig. 3 gezeigten Schaltstellung, stellt eine fluidische Verbindung zwischen den Leitungsabschnitten 16 a und 16 b der ersten Versorgungsleitung 16 her. Bei nicht betätigten Feststellbremseinrichtung sind die beiden Notbremsaktuatoren 70, 71 druckbeaufschlagt und geben die zugeordneten Räder frei. Der sechste Schalter 102 des vierten Schaltrelais 98 verbindet die Elektromagneten 106, 107 zur Ansteuerung der Radbremseinrichtungen der Betriebsbremseinrichtung mit dem Ausgangsanschluss 43.

Aufgrund des positiven Potentials am Statusausgang 26 (z.B. +24 oder +42 Volt) fließt auch ein Strom über die erste Sicherung 29, die siebte Diode 95, die fünfte Schaltspule 125 und die Notbremsbedieneinrichtung 34 zur Fahrzeugmasse 48 hin, sofern mittels der Notbremsbedieneinrichtung 34 kein Nothalt ausgelöst wurde. Dadurch zieht das fünfte Schaltrelais 126 an und der gesteuerte siebte Schalter 128 des fünften Schaltrelais 126 verbindet die Spannungsversorgungsleitung 41 direkt mit dem Ausgangsanschluss 43, so dass das Potential am Ausgangsanschluss 43 dem der Spannungsversorgungsleitung 41 entspricht, insbesondere + 24 Volt oder + 42 Volt.

Wie oben beschrieben sind die beiden Elektromagnete 106, 107 einerseits mit der Fahrzeugmasse 48 und andererseits über den sechsten Schalter 102 des vierten Schaltrelais 98 mit dem Ausgangsanschluss 43 verbunden, dessen Potential dem der Spannungsversorgungsleitung 41 entspricht. Durch die beiden Elektromagnete 106, 107 fließt daher ein Strom, der bewirkt, dass an den jeweils zugeordneten Radbremseinrichtungen 116, 117 keine Notbremswirkung erzielt wird.

Beim Starten des Motors bricht die Spannung am Statusausgang 26 des Bremssteuergeräts 25 ein, was zu einem Abfallen des fünften Schaltrelais 126 und damit zum Auslösen des Notbremsvorgangs führen würde. Daher wird beim Starten des Motors an der Zündungsklemme 133 direkt über die Zündung des Fahrzeugs eine positive Spannung angelegt, so dass das sechste Schaltrelais 137 mittels des achten Schalters 139 eine elektrische Verbindung zwischen der Spannungsversorgungsleitung 41 und der fünften Schaltspule 125 herstellt, so dass von der Spannungsversorgungsleitung 41 über den achten Schalter 139, die fünfte Schaltspule 125, die Notbremsbedieneinrichtung 34 zur Fahrzeugmasse 48 hin ein Strom fließen kann, der das fünfte Schaltrelais 126 in seiner angezogenen Stellung hält, um eine Auslösen des Notbremsvorgangs zu verhindern. Ist der Startvorgang des Motors beendet, nimmt die Statusspannung am Statusausgang 26 des Bremssteuergeräts 25 wieder ihren normalen Wert an und die Spannung an der Zündungsklemme 133 fällt wieder ab. Daher geht das sechste Schaltrelais 137 in die in Fig. 5 dargestellte Schaltstellung zurück, so dass über die zehnte Diode 140 der Startüberbrückung 131 kein Strom durch die fünfte Schaltspule 125 fließt.

Wird nun über die Notbremsbedieneinrichtung 34 ein Notbremsvorgang ausgelöst, so ist die fünfte Schaltspule 125 unbestromt und der gesteuerte siebte Schalter 128 verbindet die Spannungsversorgungsleitung 41 über die Warnlampe 57 mit der Fahrzeugmasse 48, so dass die Warnlampe 57 einen ausgelösten Notbremsvorgang anzeigt.

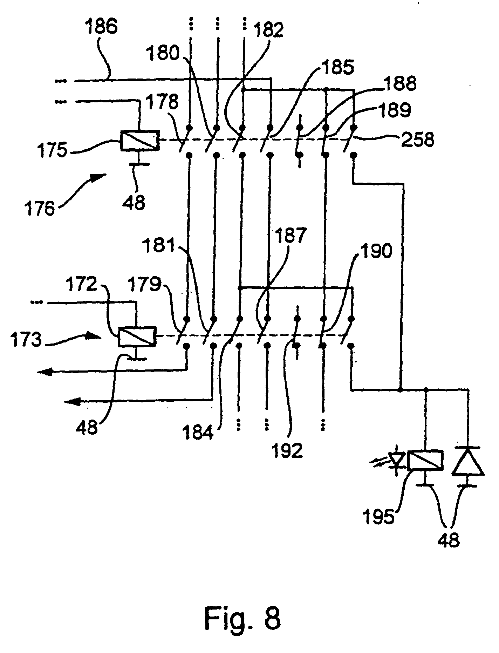

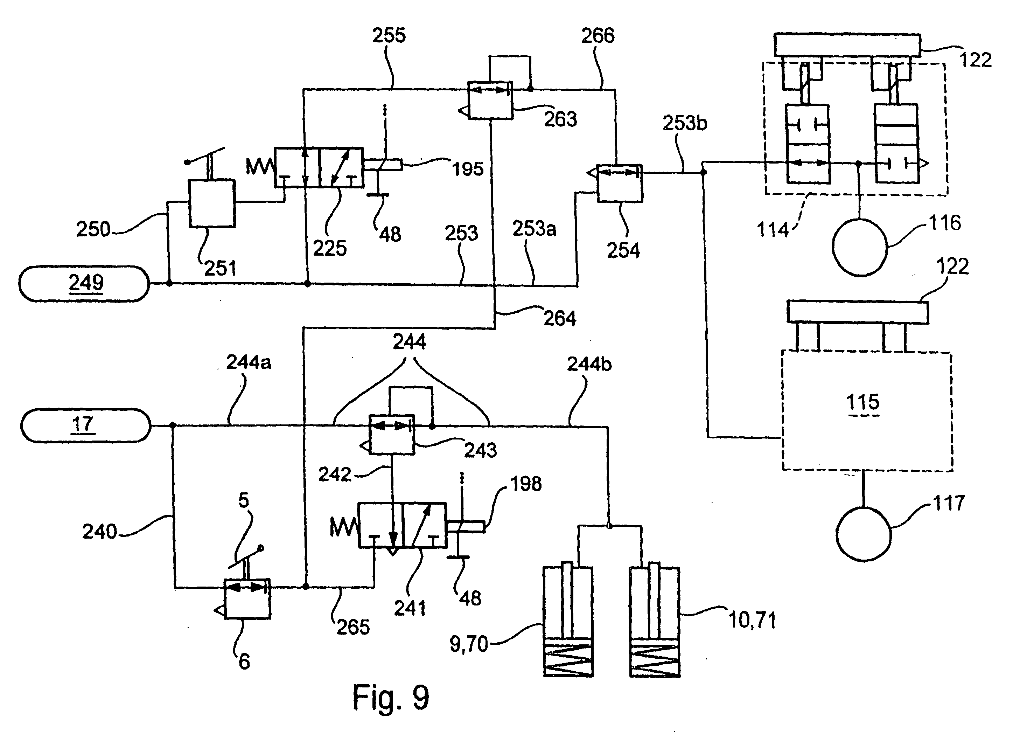

Auch durch die vierte Schaltspule 97 des vierten Schaltrelais 98 kann vom Statusausgang 26 zur Fahrzeugmasse 48 hin wegen der in der Notbremsbedienvorrichtung 34 unterbrochenen Leitung kein Strom mehr fließen, so dass der gesteuerte fünfte und sechste Schalter 101 bzw. 102 des vierten Schaltrelais 98 jeweils in seine in Fig. 5 gezeigte Stellung abfällt und die Verbindungen vom Ausgangsanschluss 43 zu den Elektromagneten 67, 106, 107 auftrennt. Aufgrund des nicht bestromten ersten Elektromagneten 67 werden die als Federspeicherzylinder ausgebildeten Notbremsaktuatoren 70, 71 über den Leitungsabschnitt 16b und die Ausgangsleitung 8 zur Atmosphäre hin entlüftet, so dass sie ihre die zugeordneten Räder bremsende Notbremsstellung einnehmen. Gleichzeitig fließt auch durch den zweiten und dritten Elektromagneten 106, 107 kein Strom mehr, wodurch die betreffenden Radbremseinrichtungen die zugeordneten Räder bremsend beaufschlagen, was später anhand der Fig. 8 und 9 näher erläutert wird.

Fig. 6 zeigt den elektrischen Teil eines dritten Ausführungsbeispiels der Notbremseinrichtung 28. Bei der in Fig. 6 dargestellten bevorzugten Ausführungsform ist eine erste Zündungsspannungsversorgungsleitung 143 und eine zweite Zündungsspannungsversorgungsleitung 144 vorgesehen, an denen dann eine positive Versorgungsspannung von beispielsweise +24 Volt oder +42 Volt anliegt, wenn die Zündung des Fahrzeugs eingeschaltet ist. Die beiden Zündungsspannungsversorgungsleitungen 143, 144 können an verschiedene Klemmen der Zündung angeschlossen sein.

An die erste Zündungsspannungsversorgungsleitung 143 sind über eine dritte Sicherung 145 parallel zueinander eine erste Auslöseanordnung 146 und eine zweite Auslöseanordnung 147 der Notbremsbedieneinrichtung 34 geschaltet. Sowohl die erste als auch die zweite Auslöseordnung 146 bzw. 147 weisen jeweils 4 Reihenschaltungen auf, bei der jeweils ein Notbremsbedienelement 35 in Reihe zu einer siebten Schaltspule 150 eines Notbremsschaltrelais 151 geschaltet ist, wobei die siebte Schaltspule 150 mit ihrem weiteren elektrischen Anschluss mit der Fahrzeugmasse 48 verbunden ist. Die Notbremsbedienelemente 35 sind als sogenannte Öffner ausgebildet und verbinden in nicht betätigtem Zustand die jeweils zugeordnete siebte Schaltspule 150 des jeweiligen Notbremsschaltrelais 151 mit der ersten Zündungsspannungsversorgungsleitung 143. Über eine vierte Sicherung 153 ist an die erste Zündungsspannungsversorgungsleitung 143 eine Kontrollleitung 154 angeschlossen, die sowohl der ersten als auch der zweiten Auslöseanordnung 146 bzw. 147 zugeführt ist. Die Kontrollleitung 154 ist jeweils an einen Anschluss eines Kontrollschalters 155 eines jeden Notbremsschaltrelais 151 angeschlossen. Der Kontrollschalter 155 ist beispielsgemäß als NC-Schalter ausgeführt und stellt daher bei nicht bestromter siebter Schaltspule 150 des Notbremsschaltrelais 151 eine elektrische Verbindung zwischen der Kontrollleitung 154 und einer Kontrollklemme 156 her. Diese Kontrollklemme 156 dient dazu, den Status des Notbremsschaltrelais 151 abzufragen. Liegt an der Kontrollklemme 156 in etwa das Potential der ersten Zündungsspannungsversorgungsleitung 143 an, so ist das zugeordnete Schaltrelais 151 nicht aktiviert, d.h. durch die betreffende siebte Schaltspule 150 fließt kein Strom. Bei bestromter siebter Schaltspule 150 ist der Kontrollschalter 155 geöffnet, so dass an der Kontrollklemme 156 eine Spannung von etwa Null Volt anliegt.

Die Notbremsschaltrelais 151 weisen neben dem Kontrollschalter 155 jeweils einen Notbremsschalter 158 auf. Die Notbremsschalter 158 der Notbremsschaltrelais 151 der ersten Auslöseanordnung 146 und der zweiten Auslöseanordnung 147 sind jeweils in Reihe geschaltet. Die Reihenschaltung der Notbremsschalter 158 der ersten Auslöseanordnung 146 ist eingangsseitig mit einer ersten Reset-Ausgangsleitung 160 verbunden. Entsprechend ist die Reihenschaltung der Notbremsschalter 158 der zweiten Auslöseanordnung 147 eingangsseitig mit einer zweiten Reset-Ausgangsleitung 161 verbunden.

Die beiden Auslöseanordnungen 146, 147 verfügen des weiteren jeweils über ein extern ansteuerbares Notbremsschaltrelais 162, dessen achte Schaltspule 163 einerseits mit der Fahrzeugmasse 48 und andererseits mit einer Signalleitung 164 verbunden ist. Die Signalleitung 164 kann beispielsweise zu einer Überwachungseinrichtung 33 führen, die die achten Schaltspulen 163 der extern ansteuerbaren Notbremsschaltrelais 162 zur Auslösung des Notbremsvorgangs ansteuert. Ein solcher extern ausgelöster Notbremsvorgang kann z.B. beim fahrerlosen Betrieb des Fahrzeugs dann erfolgen, wenn das Fahrzeug 3 einen vorgegebenen Fahrkorridor verlässt. Dabei kann mit Hilfe eines Navigationssystems der Überwachungseinrichtung 33 durch ein Kontrollsignal mitgeteilt werden, ob sich das Fahrzeug 3 im vorgegebenen Fahrkorridor befindet oder diesen verlassen hat. Die Überwachungseinrichtung 33 steuert anhängig vom Kontrollsignal die extern ansteuerbaren Notbremsschaltrelais 162 entsprechend an. Alternativ oder zusätzlich können die extern ansteuerbaren Notbremsschaltrelais 162 über ein manuell auslösbares Funksignal direkt oder indirekt mittels der Überwachungseinrichtung 33 angesteuert werden, um in Notsituationen einen Notbremsvorgang ferngesteuert per Funk auszulösen.

Die extern ansteuerbaren Notbremsschaltrelais 162 verfügen wie auch die Notbremsschaltrelais 151 über jeweils einen Notbremsschalter 158, der in Reihe zu den jeweils anderen Notbremsschaltern 158 der betreffenden Auslöseanordnung 146 bzw. 147 geschaltet ist. Die extern ansteuerbaren Notbremsschaltrelais 162 verfügen jeweils über einen Zusatzschalter 166. Der Notbremsschalter 158 des extern ansteuerbaren Notbremsschaltrelais 162 der ersten Auslöseanordnung 146 ist mit seinem ausgangsseitigen elektrischen Anschluss mit dem eingangsseitigen elektrischen Anschluss des Zusatzschalters 166 des extern ansteuerbaren Notbremsschaltrelais 162 der zweiten Auslöseanordnung 147 verbunden. Entsprechend hierzu ist der Notbremsschalter 158 des extern ansteuerbaren Notbremsschaltrelais 162 der zweiten Auslöseanordnung 147 mit seinem ausgangsseitigen elektrischen Anschluss mit dem eingangsseitigen elektrischen Anschluss des Zusatzschalters 166 des extern ansteuerbaren Notbremsschaltrelais 162 der ersten Auslöseanordnung 146 verbunden. Somit ist der Notbremsschalter 158 des einen extern ansteuerbaren Notbremsschaltrelais 162 in Reihe geschaltet zum Zusatzschalter 166 des jeweils anderen extern ansteuerbaren Notbremsschaltrelais 162.

Der Zusatzschalter 166 des extern ansteuerbaren Notbremsschaltrelais 162 der ersten Auslöseanordnung 146 ist mit einer ersten Trennansteuerleitung 168 verbunden. Der Zusatzschalter 166 des extern ansteuerbaren Notbremsschaltrelais 162 der zweiten Auslöseanordnung 147 ist ausgangsseitig mit einer zweiten Trennansteuerleitung 169 verbunden.

Die erste Trennansteuerleitung 168 ist mit einer neunten Schaltspule 172 eines ersten Trennrelais 173 verbunden, wobei die neunte Schaltspule 172 die ihrem weiteren elektrischen Anschluss an der Fahrzeugmasse 48 anliegt. Analog hierzu ist die zweite Trennansteuerleitung 169 mit einer zehnten Schaltspule 175 eines zweiten Trennrelais 176 verbunden, wobei die zehnte Schaltspule 175 mit ihrem weiteren elektrischen Anschluss an der Fahrzeugmasse 48 anliegt.

Die beiden Trennrelais 173, 176 sind beispielsgemäß von identischer Bauart. Gemäß Fig. 6 haben beide Trennrelais 163, 176 jeweils sieben Trennschalter.

Der erste Trennschalter 178 des zweiten Trennrelais 176 ist einerseits mit der ersten Zündungsspannungsversorgungsleitung 143 und andererseits mit dem ersten Trennschalter 179 des ersten Trennrelais 173 verbunden. Der zweite Trennschalter 180 des zweiten Trennrelais 176 ist einerseits mit der zweiten Zündungsspannungsversorgungsleitung 144 und andererseits mit dem zweiten Trennschalter 181 des ersten Trennrelais 173 verbunden. Der dritte Trennschalter 182 des zweiten Trennrelais 176 ist einerseits über eine fünfte Sicherung 183 mit der ersten Zündungsspannungsversorgungsleitung 143 und andererseits mit dem dritten Trennschalter 184 des ersten Trennrelais 173 verbunden. Der vierte Trennschalter 185 des zweiten Trennrelais 176 ist einerseits mit einer Überbrückungsausgangsleitung 186 und andererseits mit dem vierten Trennschalter des ersten Trennrelais 173 verbunden. Der fünfte Trennschalter 188 des zweiten Trennrelais 176 und der sechste Trennschalter 189 des zweiten Trennrelais 187 sind eingangsseitig miteinander und mit der Eingangsseite des dritten Trennschalters 182 des zweiten Trennrelais 176 verbunden. Somit sind sowohl der dritte Trennschalter 182 als auch der fünfte Trennschalter 188 und der sechste Trennschalter 189 eingangsseitig über die fünfte Sicherung 183 mit der ersten Zündungsspannungsversorgungsleitung 143 elektrisch verbunden. Der sechste Trennschalter 189 des zweiten Trennrelais 176 ist ausgangsseitig mit dem sechsten Trennschalter 190 des ersten Trennrelais 173 verbunden. Der fünfte Trennschalter 188 des zweiten Trennrelais 176 ist ausgangsseitig über eine elfte Diode 191 mit der Ausgangsseite des fünften Trennschalters 192 des ersten Trennrelais 173 verbunden, wobei die Anode der Diode 191 der Ausgangsseite des fünften Trennschalters 188 des zweiten Trennrelais 176 zugeordnet ist.

Mit der Kathode der Diode 191 ist ein vierter Elektromagnet 195 verbunden, der an seinem anderen elektrischen Anschluss an der Fahrzeugmasse 48 anliegt. Parallel zum vierten Elektromagneten 195 ist eine Freilaufdiode 196 geschaltet.

Der jeweils siebte Schalter der Trennrelais 173 bzw. 176 ist bei diesem Ausführungsbeispiel ungenutzt und könnte in einer abgewandelten Ausführungsform zur Kontrolle bzw. Anzeige des Schaltzustandes des Trennrelais 173 bzw. 176 dienen, wie dies bei den Notbremsschaltrelais 151 anhand des Kontrollschalters 155 ausgeführt ist.

Der erste Trennschalter 179 des ersten Trennrelais 173 ist ausgangsseitig zum Ausgangsanschluss 43 geführt. Der Ausgangsanschluss 43 dient der Spannungsversorgung verschiedener Fahrzeugaggregate, insbesondere des Antriebsmotors. Ausgangsseitig ist der zweite Trennschalter 181 des ersten Trennrelais 173 zu einem Ausgangsanschluss 43'geführt, der wie auch der Ausgangsanschluss 43 zur Spannungsversorgung von Fahrzeugaggregaten genutzt werden kann.

Die fünften Trennschalter 188, 192 und die sechsten Trennschalter 189, 190 sind als Öffner (NC-Schalter) ausgebildet, während alle anderen Trennschalter als Schließer (NO-Schalter) ausgebildet sind und bei nicht bestromter neunter bzw. zehnter Schaltspule 172, 175 ihre jeweilige Offenstellung einnehmen.

Der dritte Trennschalter 184 des ersten Trennrelais 173 ist ausgangsseitig mit einem fünften Elektromagneten 198 verbunden, der mit seinem anderen elektrischen Anschluss an der Fahrzeugmasse 48 liegt. Parallel zum fünften Elektromagneten 198 ist eine Freilaufdiode 199 geschaltet. Des weiteren ist der dritte Trennschalter 184 des ersten Trennrelais 173 eingangsseitig mit dem Eingang des fünften Trennschalters 192 des ersten Trennrelais 173 und mit dem Ausgang des dritten Trennschalters 182 des zweiten Trennrelais 176 verbunden. Mit seinem Ausgang liegt der dritte Trennschalter 184 des ersten Trennrelais 173 an einen ersten Resetschalter 201 eines Reset-Tasters 202 einer Reset-Einrichtung 203 angeschlossen. Der andere elektrische Anschluss des ersten Resetschalters 201 des Reset-Tasters 202 ist mit einer ersten Reset-Ansteuerleitung 204 verbunden, so dass bei betätigtem Reset-Taster 202 eine elektrische Verbindung zwischen der ersten Reset-Ansteuerleitung 204 und der Ausgangsseite des dritten Trennschalters 184 des ersten Trennrelais 173 hergestellt ist.

Ausgangsseitig ist der sechste Trennschalter 190 des ersten Trennrelais 173 mit einer Reset-Anzeigelampe 206 verbunden, deren weiterer elektrischer Anschluss an der Fahrzeugmasse 48 anliegt. Die Reset-Anzeigelampe 206 ist Bestandteil der Reset-Einrichtung 203.

Des weiteren ist der Ausgang des sechsten Trennschalters 190 des ersten Trennrelais 173 mit einem zweiten Resetschalter 207 des Reset-Tasters 202 verbunden, wobei der andere elektrische Anschluss des zweiten Schalters 207 an eine zweite Reset-Ansteuerleitung 208 angeschlossen ist. Bei betätigtem Reset-Taster 202 wird demnach eine elektrische Verbindung zwischen der zweiten Reset-Ansteuerleitung 208 und der Ausgangsseite des sechsten Trennschalters 190 des ersten Trennrelais 173 hergestellt.

Die zweite Reset-Ansteuerleitung 208 steuert ein erstes Reset-Relais 212 und ein zweites Reset-Relais 213 an. Die elfte Schaltspule 214 des ersten Reset-Relais 212 und die zwölfte Schaltspule 215 des zweiten Reset-Relais 213 sind parallel zueinander einerseits an die zweite Reset-Ansteuerleitung 208 und andererseits an die Fahrzeugmasse 48 angeschlossen. Die Reset-Relais 212, 213 verfügen jeweils über einen gesteuerten neunten Schalter 216, der eingangsseitig über eine sechste Sicherung 217 mit der ersten Zündungsspannungsversorgungsleitung 143 verbunden ist. Ausgangsseitig ist der gesteuerte neunte Schalter des ersten Reset-Relais 212 mit der ersten Reset-Ausgangsleitung 160 verbunden. Der gesteuerte neunte Schalter 216 des zweiten Reset-Relais 213 ist ausgangsseitig mit der zweiten Reset-Ausgangsleitung 161 verbunden. Die beiden Reset-Relais 212, 213 weisen einen beispielsgemäß nicht verwendeten gesteuerten Schalter auf, der in Abwandlung zu der in Fig. 6 dargestellten Ausführungsform als Kontrollschalter zur Überwachung des Schaltzustandes des betreffenden Relais genutzt werden könnte, wie dies bei den Notbremsschaltrelais 151 mittels des Kontrollschalters 155 realisiert ist.

Die erste Reset-Ansteuerleitung 204 ist mit einer Hochlaufüberbrückung 219 verbunden, die beim dritten Ausführungsbeispiel der Notbremseinrichtung 28 gemäß Fig. 6 ein Überbrückungsschaltrelais 220 aufweist, dessen dreizehnte Schaltspule 221 einerseits mit der ersten Reset-Ansteuerleitung 204 und andererseits mit der Fahrzeugmasse 48 verbunden ist. Ein gesteuerter erster überbrückungsschalter 222 des überbrückungsrelais 220 verbindet bei bestromter dreizehnter Schaltspule 221 die zweite Trennansteuerleitung 169 mit der Oberbrückungsausgangsleitung 186 und trennt diese Verbindung bei nicht bestromter dreizehnter Schaltspule 221 auf. Ein gesteuerter zweiter Überbrückungsschalter 223 des Überbrückungsrelais 220 verbindet eine Motorstart-Überbrückungsleitung 225 bei nicht bestromter dreizehnter Schaltspule 221 mit der Überbrückungsausgangsleitung 186. Bei bestromter dreizehnter Schaltspule 221 des Überbrückungsrelais 220 verbindet der zweite Überbrückungsschalter 223 die Motorstart-Überbrückungsleitung 225 mit einer Überbrückungs-Anzeigelampe 226, die mit ihrem anderen elektrischen Anschluss an der Fahrzeugmasse 48 anliegt.

Beim Ausführungsbeispiel gemäß Fig. 6 ist eine Motorstartüberbrückung 230 vorgesehen, deren Funktion der Startüberbrückung 131 des in Fig. 5 gezeigten Ausführungsbeispiels entspricht. Die Motorstartüberbrückung 230 verfügt über ein Motorstartüberbrückungsrelais 231 und ist beispielsgemäß von diesem Motorstartüberbrückungsrelais 231 gebildet. Die vierzehnte Schaltspule 232 des Motorstartüberbrückungsrelais 231 ist mit ihrem einen elektrischen Anschluss an den Statusausgang 26 des Bremssteuergerätes 25 angeschlossen und liegt andererseits an der Fahrzeugmasse 48 an. Ein gesteuerter zehnter Schalter 233 des Motorstartüberbrückungsrelais 231 verbindet in bestromtem Zustand der vierzehnten Schaltspule 232 den Statusausgang 26 mit der Motorstart-Überbrückungsleitung 225 und trennt diese Verbindung bei nicht bestromter vierzehnter Schaltspule 232 des Motorstartüberbrückungsrelais 231 auf. Ein gesteuerter elfter Schalter 234 des Motorstartüberbrückungsrelais 231 verbindet in nicht bestromtem Zustand der vierzehnten Schaltspule 232 die Spannungsversorgungsleitung 41 mit der Motorstart-Überbrückungsleitung 225 und trennt diese Verbindung bei bestromter vierzehnter Schaltspule 232 des Motorstartüberbrückungsrelais 231 auf.

Es sei darauf hingewiesen, dass parallel zu den Schaltspulen der Relais Freilaufdioden vorgesehen sein können, auch wenn dies nicht ausdrücklich erwähnt wurde. Des weiteren können parallel zu den Schaltspulen der Relais auch Leuchtdioden angeordnet sein, die ein optisches Ausgangssignal zur Anzeige des Schaltzustandes des zugeordneten Relais liefern. Dies ist beispielsweise für die Notbremsschaltrelais 151 in Fig. 6 angedeutet.

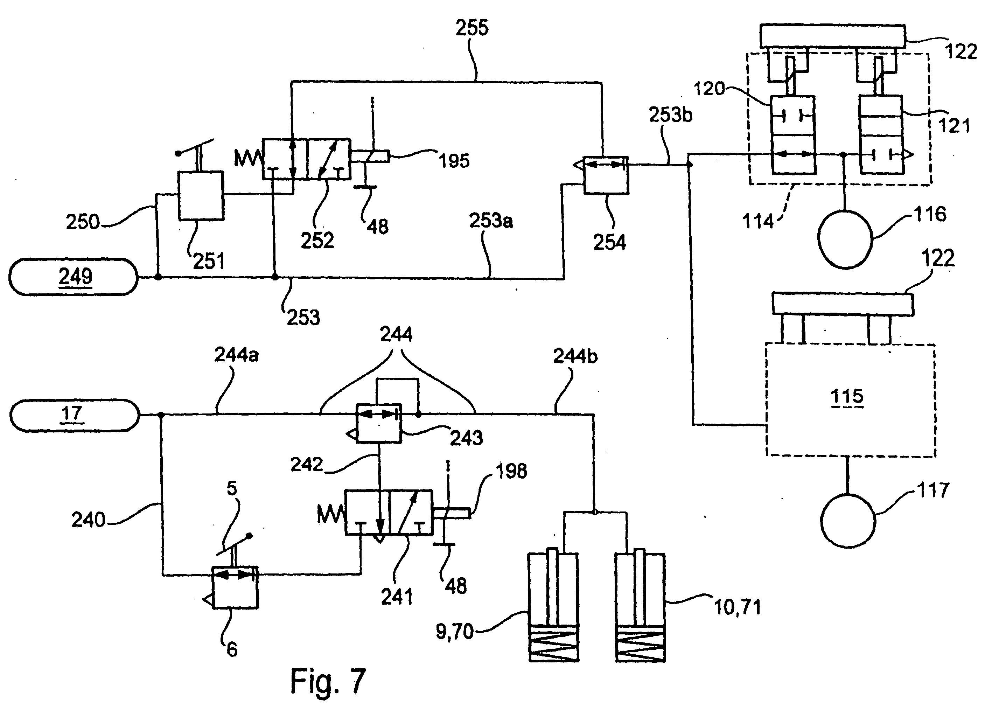

In Fig. 7 ist der pneumatische Teil des dritten Ausführungsbeispiels der Notbremseinrichtung 28 gezeigt.

Der erste Vorratsbehälter 17 für die Feststellbremseinrichtung des Fahrzeugs ist über eine erste Fluidleitung 240 mit einem ersten Notbremsschaltventil 241 verbunden, das zwischen zwei Schaltstellungen mittels des Elektromagneten 198 umgeschaltet werden kann. Ist der fünfte Elektromagnet 198 bestromt, so verbindet das erste Notbremsschaltventil 241 die erste Fluidleitung 240 fluidisch mit einer Ansteuerleitung 242, die zu einem Steuereingang eines Feststellbremsrelaisventils 243 führt. In die erste Fluidleitung 240 ist das Feststellbremssteuerventil 6 eingesetzt, das mittels des Feststellbremsbedienelementes 5 betätigt werden kann.

Ist der fünfte Elektromagnet 198, der dem ersten Notbremsschaltventil 241 zugeordnet ist, nicht bestromt, so entlüftet das erste Notbremsschaltventil 241 die Einsteuerleitung 242 zur Atmosphäre hin und sperrt die erste Fluidleitung 240 ab.

Das Feststellbremsrelaisventil 243 ist in eine erste Druckleitung 244 eingesetzt, die den für die Feststellbremseinrichtung vorgesehenen ersten Vorratsbehälter 17 mit den Feststellbremsaktuatoren 9, 10 verbindet, die gleichzeitig die Notbremsaktuatoren 70, 71 bilden. Das Feststellbremsrelaisventil 243 unterteilt die erste Druckleitung 244 in einen ersten Leitungsabschnitt 244 a, der vom ersten Vorratsbehälter 17 zum Feststellbremsrelaisventil 243 führt und in einen zweiten Leitungsabschnitt 244 b, der die Notbremsaktuatoren 70, 71 mit dem Feststellbremsrelaisventil 243 verbindet.

Ist die Ansteuerleitung 242 zum Feststellbremsrelaisventil 243 drucklos, so geht das Feststellbremsrelaisventil 243 in eine den Leitungsabschnitt 244 b der ersten Druckleitung 244 zur Atmosphäre hin entlüftenden Zustand hin, so dass die Notbremsaktuatoren 70, 71 in ihre die zugeordneten Räder bremsend beaufschlagenden Notbremszustand übergehen. Ist die Ansteuerleitung 242 zum Feststellbremsrelaisventil 243 hingegen druckbeaufschlagt, so verbindet das Feststellbremsrelaisventil 243 die beiden Leitungsabschnitte 244 a, 244 b der ersten Druckleitung 244, so dass eine fluidische Verbindung zwischen den Notbremsaktuatoren 70, 71 und dem ersten Vorratsbehälter 17 hergestellt ist und die Notbremsaktuatoren 70, 71 die zugeordneten Räder freigeben.

Des weiteren ist ein zweiter Vorratsbehälter 249 vorgesehen, der der Betriebsbremseinrichtung des Fahrzeugs zugeordnet ist. Dieser zweite Vorratsbehälter 249 ist mittels einer zweiten Fluidleitung 250 über ein Betriebsbremsventil 251 mit einem zweiten Notbremsschaltventil 252 fluidisch verbunden, das mittels des vierten Elektromagneten 195 zwischen zwei Schaltstellungen umgeschaltet werden kann. Ein weiterer Eingang des zweiten Notbremsschaltventils 252 ist über eine zweite Druckleitung 253 direkt mit dem für die Betriebsbremseinrichtung vorgesehenen zweiten Vorratsbehälter 249 verbunden.

Die zweite Druckleitung 253 verbindet außerdem den zweiten Vorratsbehälter 249 mit Bremsdruckmodulatoren 114, 115, die jeweils einer Radbremseinrichtung 116, 117 an der Vorderachse des Fahrzeugs zugeordnet sind. Die Bremsdruckmodulatoren 114, 115 weisen jeweils ein Einlassventil 120 und ein Auslassventil 121 auf und sind in an sich bekannter Weise aufgebaut. Derartige Bremsdruckmodulatoren werden in bekannten ABS-Systemen eingesetzt, so dass auf deren Situationsweise nicht näher eingegangen wird. Die Bremsdruckmodulatoren 114, 115 werden beispielsgemäß durch eine entsprechende Steuereinrichtung 122 eines ABS-Systems angesteuert.

In der zweiten Druckleitung 253 ist ein Betriebsbremsrelaisventil 254 eingesetzt, das die zweite Druckleitung 253 in einen ersten Leitungsabschnitt 253a zum zweiten Vorratsbehälter 249 hin und in einen zweiten Leitungsabschnitt 253b zu den Bremsdruckmodulatoren 114, 115 hin unterteilt.

Ausgangsseitig ist das zweite Notbremsschaltventil 252 über eine Ansteuerleitung 255 mit einem Steuereingang des Betriebsbremsrelaisventil 254 verbunden.

Ist der das zweite Notbremsschaltventil 252 umschaltende vierte Elektromagnet 195 bestromt, so verbindet das zweite Notbremsschaltventil seinen mit der zweiten Druckleitung 253 verbundenen Eingang fluidisch mit der zum Betriebsbremsrelaisventil 254 führenden Ansteuerleitung 255. Dadurch wird in dieser Ansteuerleitung 255 ein Ansteuerdruck erzeugt, der das Betriebsbremsrelaisventil 254 in eine Stellung überführt, in der dieses die beiden Leitungsabschnitte 253a und 253b der zweiten Druckleitung 253 verbindet, so dass den Bremsdruckmodulatoren 114, 115 Bremsdruck aus dem zweiten Vorratsbehälter 249 zugeführt wird.

Ist der dem zweiten Notbremsschaltventil 252 zugeordnete vierte Elektromagnet 195 hingegen nicht bestromt, so verbindet er die zum Betriebsbremsrelaisventil 254 führende Ansteuerleitung 255 mit der zweiten Fluidleitung 250, in die das Betriebsbremsventil 251 eingesetzt ist.

Das dritte Ausführungsbeispiel der Notbremseinrichtung 28 gemäß der Fig. 6 und 7 arbeitet wie folgt:

Bei Einschalten der Zündung liegt an den Zündungsspannungsversorgungsleitungen 143 und 144 die positive Versorgungsspannung von beispielsweise +24 Volt oder +42 Volt an. Die Trennrelais 173 und 176 sind nicht bestromt, da die Reset-Relais 212, 213 noch nicht angezogen haben und daher durch die Trennansteuerleitungen 168, 169 kein Strom fließt. Da die fünften und sechsten Schalter der beiden Trennrelais 173 und 176 als NC-Schalter ausgeführt sind, fließt ein Strom durch die Reset-Anzeigelampe 206 und der vierte Elektromagnet 195, der das zweite Notbremsschaltventil 252 ansteuert ist bestromt. Die Radbremseinrichtungen 116, 117 an der Vorderachse des Fahrzeugs gehen dadurch in ihre Bremsstellung über.

Der das erste Notbremsschaltventil 241 ansteuernde fünfte Elektromagnet 198 ist unbestromt, so dass auch die Notbremsaktuatoren 70, 71 ihre Bremsstellung einnehmen.

Die leuchtende Reset-Anzeigelampe 206 zeigt an, dass der Reset-Taster 202 gedrückt werden muss. Hierdurch werden die Schaltspulen der Reset-Relais 212, 213 bestromt und die Reset-Relais 213, 214 ziehen an. Dies hat zur Folge, dass auch die beiden Trennrelais 173, 176 anziehen, da durch deren Schaltspulen 172, 175 ein Strom fließt, sofern anhand der Notbremsbedieneinrichtung 34 kein Notbremsvorgang ausgelöst wurde.

Dadurch, dass die beiden Trennrelais 173, 176 angezogen haben, schließen jeweils ihre gesteuerten Trennschalter 1 bis 4 und 7, wohingegen ihre jeweiligen Trennschalter 5 und 6 öffnen. Die Reset-Anzeigelampe 206 erlischt. Der vierte Elektromagnet 195 wird nicht länger bestromt, so dass an den beiden Vorderradbremsen 116, 117 über das zweite Notbremsschaltventil 252 und das Betriebsbremsrelaisventil 254 kein Notbremsdruck mehr eingespeist wird. Der das erste Notbremsschaltventil 241 ansteuernde fünfte Elektromagnet 198 wird nunmehr bestromt, wodurch das Feststellbremsrelaisventil 243 die Notbremsaktuatoren 70, 71 mit Bremsdruck beaufschlagt, so dass diese die zugeordneten Räder freigeben. Des weiteren wird die dreizehnte Schaltspule 221 des Überbrückungsrelais 220 der Hochlaufüberbrückung 219 bestromt, so dass der erste Überbrückungsschalter 222 die zweite Trennansteuerleitung 169 mit der Überbrückungsausgangsleitung 186 verbindet. Sobald die elektropneumatische Bremsanlage betriebsbereit ist und am Statusausgang 26 ihres Bremssteuergerätes 25 eine Ausgangsspannung liefern kann, fließt vom Statusausgang 26 zur Fahrzeugmasse 48 durch die Überbrückungs-Anzeigelampe 226 ein Strom, so dass die leuchtende Anzeigelampe 226 die Betriebsbereitschaft der Betriebsbremseinrichtung anzeigt.

Zu diesem Zeitpunkt kann der Reset-Taster 202 wieder losgelassen werden, was dazu führt, dass das Überbrückungsrelais 220 abfällt und in seine in Fig. 6 gezeigte Stellung übergeht. Die Überbrückungs-Anzeigelampe 226 erlischt und die elektrische Verbindung zwischen der zweiten Trennansteuerleitung 169 und der Überbrückungsausgangsleitung 186 wird aufgetrennt.

Beim Motorstart kann die Spannung am Statusausgang 26 des Bremssteuergerätes 25 stark absinken und einen Notbremsvorgang auslösen. Daher ist die Motorstartüberbrückung 230 vorgesehen, die dazu dient, während des Motorstarts die Verbindung zum Statusausgang 26 aufzutrennen und anstelle der Statusausgangsspannung die Ansteuerleitung 225 mit der Spannungsversorgungsleitung 41 des Fahrzeugs zu verbinden, um so keine ungewollte Auslösung des Notbremsvorgangs beim Motorstart hervorzurufen.

Der Notbremsvorgang wird ausgelöst, wenn eines der Notbremsschaltrelais 151 oder der extern ansteuerbaren Notbremsschaltrelais 162 der ersten Auslöseanordnung 146 oder der zweiten Auslöseanordnung 147 abfällt, d.h., wenn dessen Schaltspule 150 bzw. 163 nicht mehr bestromt ist.

Fällt eines der Notbremsschaltrelais 151 der ersten Auslöseanordnung 146 ab, so fließt durch die zweite Trennansteuerleitung 169 kein Strom mehr, wodurch das zweite Trennrelais 176 abfällt. Fällt eines der Notbremsschaltrelais 151 der zweiten Auslöseanordnung 147 ab, so fließt durch die erste Trennansteuerleitung 168 kein Strom mehr und das erste Trennrelais 173 fällt ab.

Fällt eines der extern ansteuerbaren Notbremsschaltrelais 162 ab, so fließt weder durch die erste Trennansteuerleitung 168, noch durch die zweite Trennansteuerleitung 169 ein Strom, so dass beide Trennrelais 173, 176 abfallen.

Ist zumindest eines der beiden Trennrelais 173, 176 abgefallen, so wird der das zweite Notbremsschaltventil 252 ansteuernde vierte Elektromagnet 195 bestromt, während der das erste Notbremsschaltventil 241 ansteuernde fünfte Elektromagnet 198 unbestromt ist. Wie bereits im Zusammenhang mit Fig. 7 beschrieben führt dies dann dazu, dass die Radbremseinrichtungen 116, 117 der Vorderachse des Fahrzeugs mit Druck beaufschlagt werden und die zugeordneten Räder abbremsen und auch die Notbremsaktuatoren 70, 71 an der Hinterachse in ihre Notbremsschaltstellung übergehen.

Durch Drücken des Reset-Tasters kann der Notbremsvorgang bzw. der Notbremszustand der Bremsanlage wieder aufgehoben werden, wobei der Ablauf wie oben im Zusammenhang mit dem Einschaltvorgang erläutert erneut abläuft.

In Fig. 8 sind die beiden Trennrelais 173, 176 und der das zweite Notbremsschaltventil 252 ansteuernde vierte Elektromagnet 195 dargestellt. Fig. 8 zeigt somit den elektrischen Teil eines vierten Ausführungsbeispiels der Notbremseinrichtung 28, wobei die übrigen elektrischen Komponenten wie in Fig. 6 dargestellt untereinander verbunden sind. Der Unterschied zwischen den Ausführungsbeispielen in Fig. 6 und Fig. 8 ist lediglich der, dass der vierte Elektromagnet 195 nicht an die fünften Trennschalter 188 bzw. 192 der beiden Trennrelais 176 bzw. 173 - die als NC-Schalter ausgebildet sind - angeschlossen ist, wie dies in Fig. 6 dargestellt ist, sondern gemäß Fig. 8 zum einen mit dem siebten Trennschalter 258 des zweiten Trennrelais 176 und mit dem siebten Trennschalter 259 des ersten Trennrelais 173 jeweils ausgangsseitig verbunden ist. Diese siebten Trennschalter 258, 259 der Trennrelais 176 bzw. 173 sind bei nicht bestromter Schaltspule 175 bzw. 172 geöffnet und bei bestromter Schaltspule 175 bzw. 172 geschlossen. Im Unterschied zum dritten Ausführungsbeispiel ist daher beim vierten Ausführungsbeispiel der Notbremseinrichtung 28 der das zweite Notbremsschaltventil 252 ansteuernde vierte Elektromagnet 195 bei ausgelöstem Notbremsvorgang unbestromt.

Der pneumatische Teil des vierten Ausführungsbeispiels der Notbremseinrichtung 28 gemäß Fig. 9 ist daher gegenüber der dritten Ausführungsform nach Fig. 4 geringfügig abgeändert, wobei gleiche Teile mit gleichen Bezugszeichen versehen sind.

Im Unterschied zum dritten Ausführungsbeispiel gemäß Fig. 7 verbindet das zweite Notbremsschaltventil bei der vierten Ausführungsform gemäß Fig. 9 in unbestromten Zustand des zugeordneten vierten Elektromagneten 195 den für die Betriebsbremseinrichtung vorgesehenen zweiten Vorratsbehälter 249 mit der Ansteuerleitung 255. Ist der vierte Elektromagnet 195 bestromt, so schaltet er das zweite Notbremsschaltventil 252 in seine andere Schaltstellung um, wobei er die Ansteuerleitung 255 mit der zweiten Fluidleitung 250 fluidisch verbindet, in die das Betriebsbremsventil 251 eingesetzt ist. Die Anschlüsse an das zweite Notbremsschaltventil 252 sind in Fig. 9 gegenüber der Ausführungsform nach Fig. 7 gerade vertauscht und somit an die geänderte Ansteuerung des vierten Elektromagneten 195 angepasst.

Zusätzlich verfügt der pneumatische Teil des vierten Ausführungsbeispiels der Notbremseinrichtung 28 gemäß Fig. 9 über ein Sicherheitsrelaisventil 263, das in die Ansteuerleitung 255 eingesetzt ist und dessen Steuereingang über eine Sicherheitssteuerleitung 264 mit dem Leitungsabschnitt 265 der ersten Fluidleitung 240 fluidisch verbunden ist, der zwischen dem Feststellbremssteuerventil 6 und dem ersten Notbremsschaltventil 241 verläuft. Das zusätzliche Sicherheitsrelaisventil 263 dient dazu, die Radbremseinrichtungen 116, 117 an der Vorderachse des Fahrzeugs bei einem ausgelösten Notbremsvorgang wieder zu entlasten, da diese Radbremseinrichtungen 116, 117 nicht dafür ausgelegt sind, über einen längeren Zeitraum in ihrem Bremszustand zu verharren. Wird nach einem Notbremsvorgang das Feststellbremsbedienelement 5 betätigt, wird davon ausgegangen, dass sich das Fahrzeug nunmehr in einem sicheren Stillstand befindet. Die Sicherheitssteuerleitung 264 ist dann drucklos. Das Sicherheitsrelaisventil 263 ist dann bei druckloser Sicherheitssteuerleitung 264 in einer Schaltstellung, in der es den Leitungsabschnitt 266 der Ansteuerleitung 255 vom Sicherheitsrelaisventil 263 zum Steuereingang des Betriebsbremsrelaisventils 254 zur Atmosphäre hin entlüftet. Dadurch wird auch der Leitungsabschnitt 254b der zweiten Druckleitung 253 vom Betriebsbremsrelaisventil 254 zu den Bremsdruckmodulatoren 114, 115 hin entlüftet, so dass die Radbremseinrichtungen 116, 117 an der Vorderachse die zugeordneten Räder freigeben. Ansonsten ist der pneumatische Teil des vierten Ausführungsbeispiels gemäß Fig. 9 wie der pneumatische Teil des dritten Ausführungsbeispiels gemäß Fig. 7 aufgebaut, so dass an dieser Stelle auf die Figurenbeschreibung zur Fig. 7 verwiesen werden kann.

Es versteht sich, dass die dargestellten Ausführungsbeispiele der Notbremseinrichtung 28 auch miteinander kombiniert werden können. Insbesondere kann bei allen Ausführungsbeispielen zusätzlich auch ein angekoppelter Anhänger abgebremst werden, wenn ein Notbremsvorgang ausgelöst wurde, wie dies beim ersten Ausführungsbeispiel beschrieben wurde.

## Patentansprüche

1. Bremsanlage für ein fahrerlos betreibbares Fahrzeug (3), mit einer mittels eines Betriebsbremsbedienelements manuell betätigbaren Betriebsbremseinrichtung, mit einer mittels eines Feststellbremsbedienelements (5) manuell betätigbaren Feststellbremseinrichtung, und mit einer Notbremseinrichtung (28), wobei zumindest die Radbremseinrichtungen der Räder einer Achse des Fahrzeugs (3) Notbremsaktuatoren (70, 71) aufweisen, die durch das Auslösen eines Notbremsvorganges die zugeordneten Radbremseinrichtungen in den Bremszustand umschalten, und wobei der Notbremsvorgang wahlweise sowohl manuell mittels einer Notbremsbedieneinrichtung (34) auslösbar ist, als auch selbsttätig mittels einer Überwachungseinrichtung (33, 32) auslösbar ist, wenn die Überwachungseinrichtung (33, 32) einen unzulässigen Betriebszustand des Fahrzeugs im fahrerlosen Betrieb festgestellt hat.

2. Bremsanlage nach Anspruch 1, **dadurch gekennzeichnet, dass** es sich um eine elektro-pneumatische Bremsanlage handelt.

3. Bremsanlage nach Anspruch 1 oder 2, **gekennzeichnet durch** eine einkreisige Ausgestaltung.

4. Bremsanlage nach einem der Ansprüche 1 bis 3, **dadurch gekennzeichnet, dass** die Überwachungseinrichtung (32) den Betriebszustand der Betriebsbremseinrichtung überwacht und bei einem festgestellten Defekt im fahrerlosen Betrieb den Notbremsvorgang selbsttätig auslöst.

5. Bremsanlage nach einem der Ansprüche 1 bis 4, **dadurch gekennzeichnet, dass** die Überwachungseinrichtung (33) dann den Notbremsvorgang auslöst, wenn sich das Fahrzeug im fahrerlosen Betrieb außerhalb eines vorgegebenen Fahrkorridors befindet.

6. Bremsanlage nach einem der Ansprüche 1 bis 5, **dadurch gekennzeichnet, dass** das Auslösen des Notbremsvorganges mittels eines elektrischen Auslösesignals (U_{A}, I_{A}) erfolgt.

7. Bremsanlage nach einem der Ansprüche 1 bis 6, **dadurch gekennzeichnet, dass** die Notbremsaktuatoren (70, 71) derart mechanisch in eine Ruhelage vorgespannt sind, dass sich die zugeordneten Radbremseinrichtungen bei in der Ruhelage befindlichen Notbremsaktuatoren (70, 71) im Bremszustand befinden, wobei die Radbremseinrichtungen mittels der Notbremsaktuatoren (70, 71) fluidisch und/oder elektrisch zwischen dem Bremszustand und einem die zugeordneten Räder des Fahrzeugs freigebenden Freigabezustand umschaltbar sind.

8. Bremsanlage nach Anspruch 7, **dadurch gekennzeichnet, dass** die Notbremsaktuatoren (70, 71) von Federspeicherbremszylindern gebildet sind.

9. Bremsanlage nach einem der Ansprüche 1 bis 8, **dadurch gekennzeichnet, dass** die Notbremsaktuatoren (70, 71) von den Feststellbremsaktuatoren (9, 10) der Feststellbremseinrichtung der Bremsanlage gebildet sind.

10. Bremsanlage nach einem der Ansprüche 1 bis 9, **dadurch ge-kennzeichnet, dass** die die Notbremsaktuatoren (70, 71) aufweisenden Radbremseinrichtungen den Rädern der Hinterachse des Fahrzeugs (3) zugeordnet sind.

11. Bremsanlage nach einem der Ansprüche 1 bis 10, **dadurch gekennzeichnet, dass** beim Auslösen der Notbremsung ein Warn-signal hervorgerufen wird.

12. Bremsanlage nach einem der Ansprüche 1 bis 11, **dadurch gekennzeichnet, dass** das Auslösen der Notbremsung das Ausschalten des Antriebsaggregats des Fahrzeugs (3) bewirkt.

13. Bremsanlage nach einem der Ansprüche 1 bis 12, **dadurch gekennzeichnet, dass** der Notbremsvorgang mittels einer ansteuerbaren elektrischen Schalteranordnung (40) der Notbremseinrichtung (28) ausgelöst wird, die sich im stromund/oder spannungslosen Zustand in einem definierten Ausgangszustand befindet.

14. Bremsanlage nach Anspruch 13 in Verbindung mit Anspruch 12, **dadurch gekennzeichnet, dass** die Schalteranordnung (40) das Ausschalten des Antriebsaggregats bewirkt.

15. Bremsanlage nach Anspruch 13 oder 14 in Verbindung mit Anspruch 11, **dadurch gekennzeichnet, dass** die Schalteranordnung (40) das Warnsignal hervorruft.

16. Bremsanlage nach einem der Ansprüche 13 bis 15, **dadurch gekennzeichnet, dass** die Notbremseinrichtung (28) eine von der Schalteranordnung (40) ansteuerbare Umschalteinrichtung (66) aufweist, die zum Umschalten der mit Notbremsaktuatoren (70, 71) versehenen Radbremseinrichtungen zwischen dem Bremszustand und einem die zugeordneten Räder freigebenden Freigabezustand vorgesehen ist.

17. Bremsanlage nach Anspruch 16, **dadurch gekennzeichnet, dass** die Umschalteinrichtung (66) ein fluidisch mit den Notbremsaktuatoren (70, 71) verbundenes, elektrisch ansteuerbares Umschaltventil (20; 241, 243) aufweist.

18. Bremsanlage nach einem der Ansprüche 1 bis 17, **dadurch gekennzeichnet, dass** an verschiedenen Stellen des Fahrzeugs (3) mehrere manuell betätigbare Notbremsbedienelemente (35) der Notbremsbedieneinrichtung (34) angeordnet sind.

19. Bremsanlage nach einem der Ansprüche 1 bis 18, **dadurch gekennzeichnet, dass** der Notbremsvorgang unabhängig von einer Betätigung des Betriebsbremsbedienelements und/oder des Feststellbremsbedienelements (5) auslösbar ist.

20. Bremsanlage nach einem der Ansprüche 1 bis 19, **dadurch gekennzeichnet, dass** eine Kopplungsvorrichtung zum Ankoppeln eines Anhängers oder Aufliegers vorgesehen ist, die ein Anhängersteuerventil (11) aufweist, das beim Auslösen des Notbremsvorgangs eine Anhängerbremseinrichtung (13) zum Abbremsen zumindest der Anhängerräder einer Anhängerachse in den Bremszustand umschaltet, so dass sowohl das Fahrzeug (3) als auch der Anhänger bzw. Auflieger abgebremst werden.

21. Bremsanlage nach einem der Ansprüche 1 bis 20, **dadurch gekennzeichnet, dass** bei funktionsfähiger Betriebsbremsanlage beim Auslösen des Notbremsvorgangs zusätzlich zu den Notbremsaktuatoren (70, 71) auch die mit Betriebsbremsaktuatoren versehenen Radbremseinrichtungen (116, 117) der Betriebsbremseinrichtung in ihren Bremszustand umgeschaltet werden.

## Claims

1. Brake system for a vehicle (3) that can be operated with no driver, with a working brake mechanism that can be actuated manually by means of a working brake operation element, with a parking brake mechanism that can be actuated manually by means of a parking brake operation element (5), and with an emergency brake mechanism (28), such that at least the wheel brake mechanisms of the wheels of one axle of the vehicle (3) have emergency brake actuators (70, 71) which, by triggering an emergency braking process, switch over the associated wheel brake mechanisms to the braking condition, and such that the emergency braking process can optionally be initiated both manually by means of an emergency brake operation device (34) and automatically by means of a monitoring device (33, 32) when the said monitoring device (33, 32) has detected an unacceptable operating condition of the vehicle during driverless operation.

2. Brake system according to claim 1,
**characterised in that**
it is an electro-pneumatic brake system.

3. Brake system according to Claims 1 or 2,
**characterised in that**
it is designed with a single circuit.

4. Brake system according to any of Claims to 3,
**characterised in that**
the monitoring device (32) monitors the operating condition of the working brake mechanism and automatically initiates the emergency braking process if a defect is detected during driverless operation.

5. Brake system according to any of Claims 1 to 4,
**characterised in that**
the monitoring device (33) initiates the emergency braking process when the vehicle is outside a specified driving corridor during driverless operation.

6. Brake system according to any of claims 1 to 5,
**characterised in that**
the emergency braking process is initiated by means of an electric triggering signal (U_{A}, I_{A}).

7. Brake system according to any of Claims 1 to 6,
**characterised in that**
in a rest position the emergency brake actuators (70, 71) are mechanically pre-stressed in such manner that the associated wheel brake mechanisms are in the braking condition when the emergency brake actuators (70, 71) are in the said rest position, and by means of the emergency brake actuators (70, 71) the wheel brake mechanisms can be switched over by fluidic and/or electrical means between the braking condition and a release condition that releases the associated wheels of the vehicle.

8. Brake system according to Claim 7,
**characterised in that**
the emergency brake actuators (70, 71) consist of spring-loaded brake cylinders,

9. Brake system according to any of Claims to 8,
**characterised in that**
the emergency brake actuators (70, 71) consist of the parking brake actuators (9, 10) of the parking brake mechanism of the brake system,

10. Brake system according to any of Claims 1 to 9,
**characterised in that**
the wheel brake mechanisms that comprise the emergency brake actuators (70, 71) are associated with the wheels of the rear axle of the vehicle.

11. Brake system according to any of Claims 1 to 10,
**characterised in that**
when emergency braking is initiated, a warning signal is emitted.

12. Brake system according to any of Claims 1 to 11,
**characterised in that**
initiation of the emergency braking also disengages the drive aggregate of the vehicle.

13. Brake system according to any of Claims 1 to 12,
**characterised in that**
the emergency braking process is initiated by a controllable electric switch arrangement (40) of the emergency brake mechanism (28), which is in a defined initial condition when not energised by current and/or voltage.

14. Brake system according to Claim 13 in combination with claim 12,
**characterised in that**
the switch arrangement (40) brings about the disengagement of the drive aggregate.

15. Brake system according to claims 13 or 14 in combination with claim 11,
**characterised in that**
the switch arrangement (40) also actuates the warning signal.

16. Brake system according to any of Claims 13 to 15,
**characterised in that**
the emergency brake mechanism (28) comprises a switching device (66) that can be controlled by the switch arrangement (40), which is provided for switching over the wheel brake mechanisms provided with emergency brake actuators (70, 71) between the braking condition and a release condition which releases the associated wheels.

17. Brake system according to Claim 16,
**characterised in that**
the switching device (66) comprises an electrically controllable switching valve (20; 241, 243) that is connected by fluidic means with the emergency brake actuators (70, 71).

18. Brake system according to any of Claims 1 to 17,
**characterised in that**
several manually operable emergency brake actuation elements (35) of the emergency brake operation device (34) are arranged at various positions on the vehicle (3).

19. Brake system according to any of claims 1 to 18,
**characterised in that**
the emergency braking process can be initiated independently of any actuation of the working brake operation element and/or the parking brake operation element (5).

20. Brake system according to any of Claims 1 to 19,
**characterised in that**
a coupling device for the coupling of a trailer or semitrailer is provided, which comprises a trailer control valve (11) which, when the emergency braking process is triggered, switches, over a trailer brake mechanism (13) for switching at least the trailer wheels of one trailer axle to the braking condition, so that both the vehicle (3) and its trailer or semitrailer are braked.

21. Brake system according to any of Claims to 20,
**characterised in that**
when the working brake system is operational, initiation of the emergency braking process switches over not only the emergency brake actuators (70, 71) but in addition the wheel brake devices (116, 117) of the working brake mechanisms provided with working brake actuators to their braking condition.

## Revendications

1. Installation de freinage pour un véhicule (3) pouvant fonctionner sans conducteur, avec un dispositif de freinage de service ou principal, actionnable manuellement à l'aide d'un élément de manoeuvre de frein de service, avec un dispositif de frein de stationnement actionnable manuellement à l'aide d'un élément de manoeuvre de frein de stationnement (5), et avec un dispositif de frein de secours (28), sachant qu'au moins les dispositifs de frein de roue montés sur les roues d'un essieu du véhicule (3) présentent des actionneurs de frein de secours (70, 71) qui, du fait du déclenchement d'un processus de freinage de secours, commutent les dispositifs de frein de roue associés pour les passer en état de freinage, et le processus de freinage de secours pouvant tout autant être déclenché à volonté manuellement, au moyen d'un dispositif de manoeuvre de frein de secours (34), qu'également automatiquement au moyen d'un dispositif de surveillance (32, 33), lorsque le dispositif de surveillance (32, 33) a constaté la présence d'un état de fonctionnement inadmissible du véhicule fonctionnant sans conducteur.

2. Installation de freinage selon la revendication 1, **caractérisée en ce qu'**il s'agit d'une installation de freinage électro-pneumatique.

3. Installation de freinage selon la revendication 1 ou 2, **caractérisée par** une réalisation à un seul circuit.

4. Installation de freinage selon l'une des revendications 1 à 3, **caractérisée en ce que** le dispositif de surveillance (32) surveille l'état de fonctionnement du dispositif de frein de service et, en cas de constatation d'un défaut dans le fonctionnement sans conducteur, déclenche automatiquement le processus de freinage de secours ou d'urgence.

5. Installation de freinage selon l'une des revendications 1 à 4, **caractérisée en ce que** le dispositif de surveillance (33) déclenche le processus de freinage de secours lorsque le véhicule se trouve en fonctionnement sans conducteur, hors d'un corridor de roulage prédéterminé.

6. Installation de freinage selon l'une des revendications 1 à 5, **caractérisée en ce que** le déclenchement du processus de frein de secours s'effectue à l'aide d'un signal de déclenchement électrique (U_{A}, I_{A}).

7. Installation de freinage selon l'une des revendications 1 à 6, **caractérisée en ce que** les actionneurs de frein de secours (70, 71) sont précontraints mécaniquement en une position de repos, **en ce que** les dispositifs de freinage de roue associés, lorsque les actionneurs de frein de secours (70, 71) se trouvent en position de repos, se trouvent en état de freinage, sachant que les dispositifs de frein de roue, au moyen des actionneurs de frein de roue (70, 71), sont susceptibles d'être commutés fluidiquement et/ou électriquement, entre l'état de freinage et un état de libération, libérant les roues associées du véhicule.

8. Installation de freinage selon la revendication 7, **caractérisée en ce que** les actionneurs de frein de secours (70, 71) sont formés par des cylindres de frein à accumulateur à ressort.

9. Installation de freinage selon l'une des revendications 1 à 8, **caractérisée en ce que** les actionneurs de frein de secours (70, 71) sont formés par les actionneurs de frein de stationnement (9, 10) du dispositif de freinage de stationnement de l'installation de freinage.

10. Installation de freinage selon l'une des revendications 1 à 9, **caractérisée en ce que** les dispositifs de frein de roue présentant les actionneurs de frein de secours (70, 71) sont associés aux roues de l'essieu arrière du véhicule (3).

11. Installation de freinage selon l'une des revendications 1 à 10, **caractérisée en ce que**, en cas de déclenchement du freinage de secours, un signal d'avertissement est provoqué.

12. Installation de freinage selon l'une des revendications 1 à 11, **caractérisée en ce que** le déclenchement du freinage de secours provoque la mise hors service du groupe propulseur du véhicule (3).

13. Installation de freinage selon l'une des revendications 1 à 12, **caractérisée en ce que** le processus de freinage de secours est déclenché au moyen d'un dispositif à interrupteur (40) électrique, pouvant être commandé, appartenant au dispositif de freinage de secours (28) et qui, lorsqu'on est à l'état sans intensité et/ou sans tension, se trouve en un état initial défini.

14. Installation de freinage selon la revendication 13 en liaison avec la revendication 12, **caractérisée en ce que** le dispositif à interrupteur (40) provoque la mise hors service du groupe propulseur.

15. Installation de freinage selon la revendication 13 ou 14 en liaison avec la revendication 11, **caractérisée en ce que** le dispositif à interrupteur (40) provoque le signal d'avertissement.

16. Installation de freinage selon l'une des revendications 13 à 15, **caractérisée en ce que** le dispositif de freinage de secours (28) présente un dispositif de commutation (66), pouvant être commandé par le dispositif à interrupteur (40) et prévu pour commuter les dispositifs de frein de roue, munis des actionneurs de frein de secours (70, 71), entre l'état de freinage et un état de libération libérant les roues associées.

17. Installation de freinage selon la revendication 16, **caractérisée en ce que** le dispositif de commutation (66) présente une soupape de commutation (20; 241, 243) susceptible d'être commandée électriquement, reliée fluidiquement aux actionneurs de frein de secours (70, 71).

18. Installation de freinage selon l'une des revendications 1 à 17, **caractérisée en ce qu'**en différents emplacements du véhicule (3) sont disposés plusieurs éléments de manoeuvre de frein de secours (35), actionnables manuellement, du dispositif de manoeuvre de frein de secours (34).

19. Installation de freinage selon l'une des revendications 1 à 18, **caractérisée en ce que** le processus de freinage de secours est susceptible d'être déclenché indépendamment d'un actionnement de l'élément de manoeuvre du frein de service et/ou de l'élément de manoeuvre du frein de stationnement (5).

20. Installation de freinage selon l'une des revendications 1 à 19, **caractérisée en ce qu'**un dispositif d'attelage, servant à coupler une remorque ou une semi-remorque, est prévu, présentant une soupape de commande de remorque (11) qui, en cas de déclenchement du processus de freinage de secours, commute en état de freinage un dispositif de freinage de remorque (13), dans le but d'obtenir un freinage d'au moins les roues de remorque d'un essieu de remorque, de manière que tant le véhicule (3), qu'également la remorque ou la semi-remorque soit freinée.

21. Installation de freinage selon l'une des revendications 1 à 20, **caractérisée en ce que**, dans le cas d'une installation de freinage de service fonctionnellement apte, en cas de déclenchement du processus de freinage de secours, en plus des actionneurs de frein de secours (70, 71), est également effectuée une commutation à leur état de freinage des dispositifs de frein de roue (116, 117), munis des actionneurs de frein de service, du dispositif de freinage de service.
